# EUROPEAN PATENT SPECIFICATION

(11) **EP 4 463 687 B1**
(45) Date of publication and mention of the grant of the patent: **18.11.2026**
(21) Application number: 23739806.0
(22) Date of filing: 14.01.2023
(51) Int. Cl.: G01L 5/24, B25B 13/50, F16L 23/00, F16L 23/02, B23P 19/10, B23P 19/12, B25B 27/16, B25B 23/14, G05B 19/418, G01M 3/28, B25B 23/00, B25B 29/02

(54) **SYSTEM FOR ASSEMBLY OF FLANGED JOINTS**
SYSTEM ZUR MONTAGE VON FLANSCHVERBINDUNGEN
SYSTÈME D'ASSEMBLAGE DE RACCORDS À BRIDE

(30) Priority: 14.01.2022 AU 2022900067
(43) Date of publication of application: 20.11.2024
(73) Proprietor: Integrity Engineering Solutions Pty Ltd, Dunsborough, Western Australia 6281 (AU)
(72) Inventor: BROWN, Ian Warren, Dunsborough, Western Australia 6281 (AU)
(74) Representative: Stanley, David William
(86) International application number: PCT/AU2023/050018
(87) International publication number: WO 2023/133612

(56) References cited:
- EP-A1- 3 593 939
- EP-A1- 3 593 939
- WO-A1-2018/216133
- WO-A1-2019/156712
- WO-A1-2019/189291
- WO-A1-2020/080340
- JP-A- 2001 225 231
- SG-A- 112021 038 16U
- US-A1- 2013 047 408
- US-A1- 2019 107 231
- US-A1- 2020 180 086
- ANONYMOUS: "How to Check the Load Cell with a Multimeter", OMEGA ENGINEERING, OMEGA ENGINEERING, US, 1 December 2021 (2021-12-01), US, XP009548186, Retrieved from the Internet <URL:https://web.archive.org/web/20211201151033/http://www.omega.com/en-us/resources/load-cell-troubleshooting/>

## Description

### TECHNICAL FIELD

The present invention relates to assembly of bolted flanged joints, specifically pressure boundary bolted flanged joints including a gasket between the flanges and in particular to a system and method for controlling and monitoring assembly of bolted flanged joints.

### BACKGROUND

The American Society of Mechanical Engineers (ASME) document PCC-1-2019 "Guidelines for Pressure Boundary Bolted Flange Joint Assembly" is a widely used standard which details recommended assembly and disassembly procedures for pressure boundary bolted joints. The guidelines identify that different levels of joint assembly load control may be required depending on the risk associated with the joint, however it is left to the user to define a suitable method for making such a decision.

There are current methods in use for improving the accuracy of load control and quality control of single aspects of joint assembly, such as bolt elongation measurement (US10316881) or automated control of the application of torque control via the use of standard sensors and control systems such as CN201597001U, AU2010364000B2 and US10831168B2. However, these systems only focus on a single aspect, such as bolt load or control of the applied torque, with the added benefit of automation eliminating potential human error in setting or observing tool pressure.

The patent application published as SG 1120 2103 816U A discloses a seal handling determination system, the seal handling determination system determines a handling result by a surface-to-surface distance between flanges which are tightened by bolts and nuts, with a gasket being interposed between the flanges, and the seal handling determination system includes: a seal handling part which includes the flanges being tightened by the bolts and the nuts, with the gasket being interposed between the flanges; a surface-to- surface distance measurement part which measures a surface-to surface distance between the flanges; a processing part which takes in measured values of the surface-to-surface distance from the surface-to-surface distance measurement part in a plurality of stages from start of tightening of the bolts up to completion of the tightening, calculates a difference between a maximum value and a minimum value of the measured values, and determines a skill level by comparing the difference and a determination reference; and an information presentation part which presents any or all of calculation information and a calculation result, the calculation information and the calculation result being processed by the processing part.

A patent application published as US 2020/0180086A1 discloses a method for tightening bolted (threaded screw and nut) connections disposed along two annular flanges forming a ring of a flanged joint. A tool carrier travels around the ring to tighten the screw connections and has a sensor to check contact of the faces of the flanges. Such an arrangement does not relate to pressure boundary bolted flanged joints including a gasket between the flanges and provides no other indication of suitability of assembly of the joint. In the case of a gasketed joint, the gap between the flanges relates to gasket compression, which is directly related to the load applied to the gasket and so therefore a direct measure of success of assembly. US 2020/0180086A1 does not use flange gap measurement to monitor ongoing assembly alignment - once flange gap closure is achieved in US 2020/0180086A1, a standard assembly procedure is carried out and it does not adjust the assembly procedure as it goes once the flanged joint is aligned. Further, US 2020/0180086A1 does not utilise calibration techniques for torque via an in-situ load cell to perform on-site calibration or utilise turn-of-nut as an additional measure of achieved bolt load. Similar issues apply to EP 3593939A1.

A patent application published as US 2013/0047408A1 discloses a system useable to assemble joints involving multiple fasteners and which are subject to elastic interaction between the fasteners, rocking, or joint relaxation. An assembly tool is coupled with an electronically controlled regulator for reducing the tightening rate, or the load increase per impact for an impact or impulse tool, so the tool can be stopped precisely at a specified stopping load or torque. The predefined procedures for performing the desired tightening operation are established in a controller coupled with the electronically controlled regulator, for dynamically controlling the assembly tool. US 2013/0047408A1 does not identify pre-calibration or in-process quality assurance steps and does not relate to adjustment of load to compensate for misalignment or stopping joint assembly when a fault occurs. US 2013/0047408A1 assumes that uniform bolt load equates to correct joint assembly; however, it is possible for the load to be transmitted through a path other than the gasket and therefore not achieve good gasket stress or for the gasket to be unevenly compressed by poor initial assembly or joint misalignment, in spite of the measured uniform final bolt torque or load.

Currently there are no methods or systems that address the entire group of parameters that may be used to indicate if a joint is or is not being assembled correctly. Most often, a final leak test once all joints have been assembled is relied upon to indicate if the joint assembly was correct. The final leak test often occurs many days or weeks after the joint is assembled and so leakage detection at that time results in excessive delays and associated high costs to remobilise personnel and equipment in order to re-assemble the leaking joint. In addition, it has been observed in industry that the leak test is largely ineffective in detecting all but the most severe of joint assembly problems, with most operational leakage observed on joints that were originally leak tested after assembly.

### SUMMARY OF INVENTION

A first aspect of the present invention provides a method for the control and monitoring of the assembly of a bolted flanged joint, the bolted flanged joint including a first flange having a first sealing surface, a second flange having a second sealing surface, a gasket between the first flange and the second flange, and at least four bolts to retain together the flanges and the gasket of the bolted flanged joint when assembled, the method including the steps of: obtaining directly or indirectly at three or more points around the flanges a flange gap between the first flange and the second flange to determine a respective three or more flange gap measurements; calculating from the three or more flange gap measurements an initial misalignment between the first flange and the second flange or between the first sealing surface and the second sealing surface; if the initial misalignment is greater than a predetermined magnitude of misalignment, then: determining from the initial misalignment which of the at least four bolts is the first bolt to tighten; setting an initial tightening torque or tightening load for a bolt load applicator; indicating the first bolt to tighten using a bolt assembly pattern indicator; beginning initial tightening of the first bolt; monitoring nut or bolt head rotation to check for issues and halting joint assembly if issues detected; monitoring the flange gap measurements; if the monitoring of the flange gap measurements indicates that the misalignment has been corrected, then commencing a standard bolt tightening pattern by indicating a second bolt to tighten; if the monitoring of the flange gap measurements indicates that the misalignment has not been corrected when the initial tightening torque or tightening load is reached on the first bolt, then obtaining the flange gap at the three or more points around the flange to obtain a respective three or more flange gap measurements, calculating a current misalignment then determining from the current misalignment which of the at least four bolts is the second bolt to tighten, then repeating the indicating, tightening and monitoring steps of the first bolt for the second bolt, then if misalignment has not been corrected after at least one third or one quarter of the bolts have been initially tightened, halting joint assembly; if misalignment has been corrected, then commencing a standard bolt tightening pattern; if the initial misalignment is less than the predetermined magnitude of misalignment, then commencing a standard bolt tightening pattern.

Preferably, when the initial misalignment may be greater than the predetermined magnitude of misalignment, then the predetermined magnitude of misalignment is a first threshold misalignment; when the monitoring of the flange gap measurements indicates that a current misalignment has been corrected, then the current misalignment is less than a second threshold that is lower than the first threshold misalignment; when the monitoring of the flange gap measurements indicates that the current misalignment has not been corrected, then the current misalignment is still greater than the second threshold that is lower than the first threshold misalignment.

The step of resuming standard bolt tightening pattern may further include the steps of indicating then tightening each of a first four of the bolts to the initial tightening torque or load; once a first four of the bolts has been tightened to the initial tightening torque or load, obtaining a current flange gap measurement, setting a second torque or load for the bolt tightening or tensioning tool for initial tightening of a second four of the bolts that is higher than the initial tightening torque or load; indicating and beginning initial tightening of each of the second four of the bolts; monitoring nut or bolt head rotation, flange gap measurement and/or bolt elongation to check for issues and halt tightening if issues detected; once the second four of the bolts have been tightened to the second tightening torque or load, obtaining a current flange gap measurement, setting a third torque or load for the bolt tightening or tensioning tool for initial tightening of a final four or the remainder of the bolts that is higher than the second tightening torque or load; indicating and beginning initial tightening each of the final four or remainder of the bolts; monitoring nut or bolt head rotation, flange gap measurement and/or bolt elongation to check for issues and halting joint assembly if issues detected; continuing with tightening of all of the at least four bolts until nut or bolt head rotation no longer occurs and/or until bolt elongation measurement indicates the target bolt load has been achieved.

The step of resuming standard bolt tightening pattern may further include the steps of: once the final four or remainder of the bolts has been tightened to the third tightening torque or load, obtaining a current flange gap measurement, setting a final torque or load for the bolt tightening or tensioning tool for final tightening of all of the at least four bolts; indicating and beginning final tightening of each of the bolts in turn; monitoring nut or bolt head rotation and/or bolt elongation to check for issues and halt tightening if issues detected.

The amount of nut or bolt head rotation may be monitored during tightening of the final four or the remainder of the bolts and once the final four or the remainder of the bolts has been tightened to the third tightening torque or load, then said amount of nut or bolt head rotation may be used to determine whether to use a first bolt order pattern for at least one intermediate pass tightening all the bolts, or to use a second bolt order pattern for at least one penultimate pass tightening all the bolts, prior to setting a final torque or load for the bolt tightening or tensioning tool for final tightening of all of the at least four bolts, the at least one intermediate pass tightening all bolts may include monitoring nut or bolt head rotation to determine whether to repeat another intermediate pass using the first bolt order pattern, or to use the second bolt order pattern for at least one penultimate pass tightening all of the at least four bolts, prior to setting a final torque or load for the bolt tightening or tensioning tool for final tightening of all of the at least four bolts.

The amount of nut or bolt head rotation may be used to determine whether to use a first bolt order pattern or a second bolt order pattern, and/or to vary a tightening torque or load during the at least one intermediate pass or during the at least one penultimate pass.

The step of resuming standard bolt tightening pattern may further include the steps of: applying a first tightening torque or load to a first group of at least one quarter of the bolts, the first tightening torque being a first proportion over a target tightening torque or load; applying a second tightening torque or load to a second group of at least one quarter of the bolts, the second tightening torque being a second proportion over the target tightening torque or load, the second proportion being less than the first proportion; applying the target tightening torque or load to a final four or a remainder of the bolts; continuing with tightening of all of the at least four bolts until nut or bolt head rotation no longer occurs and/or until bolt elongation measurement indicates the target bolt load has been achieved.

The amount of nut or bolt head rotation may be monitored during tightening of the final four or remainder of the at least four bolts, and once the final four or a remainder of the at least four bolts has been tightened to the target torque or load, then said amount of nut or bolt head rotation may be used to determine whether to use a first bolt order pattern for at least one intermediate pass tightening all of the at least four bolts, or to use a second bolt order pattern for at least one penultimate pass tightening all of the at least four bolts, prior to setting a final torque or load for the bolt tightening or tensioning tool for final tightening of all of the at least four bolts, the at least one intermediate pass tightening all of the at least four bolts may include monitoring nut or bolt head rotation to determine whether to repeat another intermediate pass using the first bolt order pattern, or to use the second bolt order pattern for at least one penultimate pass tightening all of the at least four bolts, prior to setting a final torque or load for the bolt tightening or tensioning tool for final tightening of all of the at least four bolts.

Embodiments may further include, prior to the steps of obtaining at three or more points around the flange a flange gap and calculating an initial misalignment, the steps of: cleaning and/or inspecting the joint; halting assembly if inspection is outside of predetermined limits; and storing data for reference.

Embodiments may further include, prior to the steps of obtaining at three or more points around the flange a flange gap and calculating an initial misalignment, the steps of: identifying a gasket to be installed, validating the identification of the gasket, pausing or halting assembly of the joint if the validation of the gasket fails or indicates incorrect parts; and/or identifying the bolts to be installed, validating the identification of the bolts, pausing or halting assembly of the joint if the validation of the bolts fails or indicates incorrect parts.

The bolt load applicator may include a backup wrench and a torque wrench and/or high speed powered wrench; the step of tightening the first bolt may include the step of monitoring the backup wrench.

Monitoring the backup wrench may include video monitoring of a mechanical backup wrench. Monitoring the backup wrench may include video monitoring of an electronic backup wrench. Monitoring the backup wrench may include monitoring the output of a reaction torque sensor.

Embodiments may include pausing or halting assembly of the joint whenever monitoring of the backup wrench, load, nut rotation and/or flange gap indicates an issue with the joint assembly.

Embodiments may include, prior to the step of setting a torque or load for the bolt load applicator, the step of visual recognition of the bolt load applicator or of capturing or reading an identifying tag or mark on the bolt load applicator.

Embodiments may include including determining identity and location of the bolted flanged joint using geospatial by global positioning or wireless transmission network and triangulation or trilateration. Bolted flanged joint orientation data and video image recognition may be used/provided to identify features of, location of or orientation of the bolted flanged joint.

Embodiments may include continual video monitoring of the area around the joint and pausing or halting assembly if personnel are within an area of risk adjacent around the joint.

Embodiments may include using the bolt load applicator with a bolt in an on-site test fixture including a load cell, to obtain the nut factor for the bolt prior to commencing assembly of the joint.

Embodiments may include at least one of the following documenting steps: storing data from the monitoring steps of the joint assembly; video recording each assembly step to store video of operations, components and personnel involved in the joint assembly; video recording each assembly step, then extracting and storing images of operations, components and personnel involved in the joint assembly; capturing and storing images of assembly steps, components used and personnel involved; storing key parameters such as tensioned bolt loads, turn of nut for each bolt, gap closure at multiple points around the flanged joint; and/or storing results of any quality inspections made during joint assembly.

Embodiments may include using at least one of the documenting steps together with subsequent operating performance of the tensioned bolted flanged joint to then provide improvements in procedures and in parameters used during assembly.

Embodiments may include the steps of: defining a risk ranking for the bolted flanged joint; defining a bolt load control type and quality control steps for the assembly of the bolted flanged joint in dependence on the risk ranking; controlling and monitoring disassembly of the bolted flanged joint; inspecting the first and second sealing surfaces; testing application of bolt load using load cell test sensor to verify bolt load achieved; installing instrumentation at the bolted flanged joint; confirming correct part ID and correct components and tightening tools are used; providing step-by-step instructions to operator and monitoring the bolted flanged joint during assembly; recording at least some disassembly and/or assembly steps, measurement data and/or video.

Embodiments may include modifying the step-by-step instructions based on the monitoring of the bolted flanged joint during assembly.

Embodiments may include issuing an instruction to stop if joint assembly becomes abnormal or if an unsafe situation is detected.

A further aspect of the present invention provides a system for control and monitoring of the assembly of a bolted flanged joint, the bolted flanged joint including a first flange, a second flange, a gasket between the first flange and the second flange, and at least four bolts to retain together the flanges and the gasket of the bolted flanged joint when assembled, the system including: at least one bolt load applicator to apply a tightening torque or load to the at least four bolts, a load cell test sensor to calibrate and verify assembly parameters, a nut or bolt head rotation sensor, at least two video cameras enabling video recognition of at least one of a tool or component shape, a tool or component identification code, a specific bolt being tightened or an unsafe operation or operator position, and a portable electronic processor including inputs for the sensors and outputs for transmitting or indicating joint assembly parameters, and at least one of the following additional sensors: a bolt tension and/or elongation sensor to determine a bolt load, at least three flange gap sensors to determine a flange gap and any misalignment of the flanges, and a reaction torque sensor to indicate a magnitude of torque reacted by a backup wrench.

The at least one bolt load applicator may include a hydraulic tensioner.

The at least one bolt load applicator may include at least one torque wrench and at least one backup wrench.

The assembly parameters may include one or more of a flange gap measurement, misalignment of the flanges, a tension or load in a bolt, or gasket compression.

Embodiments of the system may include a code reader.

The at least one additional sensor may include at least one bolt elongation sensor for sensing load in a respective said bolt as the respective bolt is being tensioned.

The at least one additional sensor may include at least one elongation sensor for sensing elongation in each of either: at least one quarter of the bolts where the at least four bolts is less than or equal to thirty-two bolts; or at least eight of the bolts when the at least four bolts is greater than 32 bolts.

Embodiments of the system may include at least one additional component selected from the following: a high speed powered wrench, a bolt assembly pattern indicator, and/or a flange flatness sensor or a flange flatness and defect sensor.

According to a further aspect of the present invention, there is provided a system for control and monitoring of the assembly of a bolted flanged joint, the bolted flanged joint including a first flange, a second flange and at least four bolts, the system including: at least one bolt load applicator; at least three flange gap sensors; at least two video cameras, a portable electronic processor including inputs for the sensors and outputs for transmitting or indicating joint assembly parameters, and at least one of the following additional sensors: a nut or bolt head rotation sensor, and/or a bolt tension and/or elongation sensor.

The portable electronic processor may be a portable computer, a laptop, a tablet, a phone, a bespoke electronic device or multiple electronic devices such as a tablet in wired or wireless communication, directly and/or via any form of network, with a data acquisition device and at least one output device such as a display or indicator. The portable electronic processor may provide instruction and allow feedback from the operator using a portable headset and/or remote control or pendant. The portable electronic processor may be, at least selectively, in wired or wireless communication via any form of network with one or more sources and/or repositories of data.

The at least one bolt load applicator may be a hydraulic tensioner. Alternatively, the at least one bolt load applicator may comprise at least one torque wrench and at least one backup wrench.

The at least three flange gap sensors may comprise three flange gap sensors. Alternatively, the at least three flange gap sensors may comprise four or more flange gap sensors. For example, around a large flange, five, or more preferably six or seven, or more preferably eight or more flange gap sensors may be used.

The at least two video cameras may include at least three video cameras. Preferably, the at least two video cameras may include four or more video cameras.

The at least one additional sensor may be a nut or bolt head rotation sensor.

Alternatively, the at least one additional sensor may be a bolt elongation sensor for sensing load in each bolt as it is being tensioned or multiple elongation sensors for sensing load in each bolt. The bolt elongation sensor may be mechanical, ultrasonic, visual or similar.

Alternatively, the at least one additional sensor may comprise a nut or bolt head rotation sensor and at least one elongation sensor for sensing load in each of either: at least one quarter of the bolts where the at least four bolts is less than or equal to thirty-two bolts; or in at least eight of the bolts when the at least four bolts is greater than 32 bolts. In this case, the at least one elongation sensor is used for sensing load in each of preferably at least one quarter or more preferably in at least half, or optionally in more than half of the number of the at least four bolts when the flange has 32 bolt or less, or when the flange has more than 32 bolts, for sensing load in at least eight of them.

The system may include a load cell. The load cell may preferably be used to test a bolt during pre-assembly of a corresponding joint on-site to determine a more accurate setting for the applied torque or tension. The corresponding joint is preferably substantially identical to the or each bolted flanged joint to be assembled following the pre-assembly test using the load cell. If the applied torque or tension to achieve a target bolt load is outside of the bounds of expected values when tested in a fixture including the load cell, then this may be used as a quality control measure, indicating a problem with the bolt, nut, flange to nut contact surface or improper application of the lubrication.

The system may further include at least one additional component selected from the following: a high speed powered wrench, a bolt assembly pattern indicator, and/or a flange flatness sensor or a flange flatness and defect sensor.

The system may further include a high speed powered wrench. This may be preferable when the bolt load applicator includes a torque wrench. The high speed powered wrench may be a pneumatic-powered impact wrench. Alternatively, the high speed powered wrench may be a hydraulic-powered impact wrench. A supply or operating pressure or a maximum torque of the pneumatic or hydraulic powered impact wrench may be regulated, for example for both pressure and time. Alternatively, the high speed powered wrench may be an electrically powered impact wrench or torque wrench. For example, the electrically powered impact or torque wrench may be battery-powered. A supply or operating current and/or voltage or a maximum torque of the electrically powered torque wrench may be regulated, and in the case of an electrically powered impact wrench, may be regulated against time. The high speed powered wrench may be used for initial stages of assembly and for disassembly of the bolted flanged joint as it can be significantly faster for tightening a bolt than using a more precise torque wrench or load controlled method. More precise torque wrench or load control methods would be used for final tightening passes.

The system may further include at least one bolt assembly pattern indicator. For example, the portable electronic processor may include a display indicating which bolt, of the at least four bolts around the flange, to tighten. The display can also show when the required tension is reached in the bolt. Alternatively, the bolt assembly pattern indicator may for example, preferably be a light or a laser that illuminates the bolt to be tightened. It may illuminate the bolt with a single colour, or with a first colour when needing to be tightened and a second colour when the desired tension has been achieved in the said bolt. Alternatively, it may illuminate the bolt with a single colour, but may change from a steady illumination to flashing to convey the different messages of bolt to be tightened and bolt at desired tension.

The system may further include a flange flatness scanner or a flange flatness and defect sensor. The flange flatness and defect sensor may include a flange flatness and defect measurement arm using mechanical or optical profile measurement, or some combination of both. The flange flatness and defect measurement arm may preferably be used to inspect the flange seating surfaces and automatically compare them to acceptable limits for the joint. Any inspection results from use of the flange flatness and defect measurement arm may be stored to facilitate failure analysis.

The torque wrench may be hydraulic, pneumatic, electrically (for example battery) or manually operated. The torque wrench may include a torque output sensor or a torque output sensor may be provided between the torque wrench and the bolt. The torque of the hydraulic or pneumatic torque wrenches may be regulated by control of a supply pressure to the torque wrench. The electrically operated torque wrench may be battery powered or may be powered by a wired connection to electrical power from the system or from an external supply. The torque of the electrically operated torque wrench may be regulated by control of a supply or operating current and/or voltage.

The torque of the electrically operated torque wrench may be regulated within the torque wrench, with the desired torque setting communicated to the wrench by the portable electronic processor or entered by the operator and verified by for example an image capture and verified by the portable electronic processor. Alternatively, the torque of the torque wrench may be regulated based on a sensed or calculated torque on the bolt. Preferably, the torque of the torque wrench may be regulated based on a sensed or calculated load in the bolts.

The backup wrench may allow continuous rotation of an engaged nut or bolt head of the bolt. The applicant's backup wrench has this functionality of allowing continuous rotation above a pre-set reaction torque and is detailed in United States patent application publication number 2020/0206883. The backup wrench may be electronic. For example, the electronic backup wrench may measure a reaction torque and output the measured reaction torque. Alternatively, the electronic backup wrench may provide a visual indication of reaction torque being below, within or above a pre-set range of reaction torque, or a visual indication of reaction torque being above a pre-set reaction torque.

One or each of the at least three flange gap sensors may provide a signal indicative of a measurement from a respective flange gap sensor. The flange gap sensor may be a linear position sensor, for example, a linear variable differential transformer (LVDT) or a magnetic strip vernier. Alternatively, the flange gap sensor may be a visual measurement or provide a visual indication or confirmation. For example, one of the at least three cameras may be used to view a gap around the first and second flanges and either operator or electronic processor determination or estimation of the gap can then be made. The camera may view a region onto which a laser beam is projected onto a mirror at an angle of incidence of forty-five degrees to multiply the gap closure by a factor of two, although larger angles can be used to increase the multiplier and hence make it easier and more accurate to read. Other arrangements are also possible such as interference patterns between grids projected from two lasers aimed at the viewing region such as a screen.

The at least two or three video cameras may be four or five video cameras. More cameras allow all sides of the joint to be covered and at least one of the video cameras may also be used or may be exclusively used for part identification. The at least two or three video cameras may record moving images or a series of time-separated stills or a motion detection triggered or assembly procedure step triggered still image or series of still images to show for example critical stages of the assembly procedure, or parts and/or tools and settings used. One or more still cameras may be used, for example to provide higher quality still images.

The portable electronic processor may evaluate data from the inputs to flag a joint as acceptable or rejected and if rejected may define issues and prevent assembly from continuing until the issues are resolved and/or provide parameters to assist with troubleshooting and problem solving. The portable electronic processor data, including video, may be used to provide remote support to the operator in order to determine the best course of action to mitigate the issues.

The system may include a code reader (for example, as one of the inputs of the electronic processor). The code reader may be a bar code reader, QR code reader or RFID tag reader. The code reader may be provided instead of or complementary to any video camera or still camera part identification.

Another aspect of the present invention provides a method for the control and monitoring of the assembly of a bolted flanged joint, the bolted flanged joint including a first flange having a first sealing surface, a second flange having a second sealing surface and at least four bolts, the method including the steps of: defining a risk ranking for the bolted flanged joint; defining a bolt load control type and quality control steps for the assembly of the bolted flanged joint in dependence on the risk ranking; controlling and monitoring disassembly of the bolted flanged joint; inspecting the first and second sealing surfaces; testing application of bolt load using load cell test sensor to verify bolt load achieved; installing instrumentation at the bolted flanged joint; confirming correct part identification and correct components and tightening tools are used; providing step-by-step instructions to operator and monitoring the bolted flange joint during assembly; recording disassembly and/or assembly steps.

The step of testing application of bolt load using load cell test sensor to verify bolt load achieved may be used to define parameters for the joint to be assembled, such as for example a nut factor. It may also allow the system and/or operator to ensure that the bolt is correctly lubricated and components are not defective, as well as allowing verification of the calibration of tools, tool controls or derived parameters such as when nut rotation is used to derive bolt load or flange gap measurement. It may also allow identification of defects in the bolts, nuts and washers that would reduce the achieved bolt load to below target levels.

The step of installing instrumentation at the bolted flanged joint may include the installation of instrumentation such as cameras and flange gap sensors which can be used for multiple purposes including feeding information, such as part ID or feature measurements, into the control and for monitoring of the assembly to assist with or allow assembly process control, quality control and assurance and safety.

The steps of confirming the correct part identifications and correct components and tightening tools (such as the bolt load applicators) are used may be based on video recognition of a shape or marking of a part or tool, or on code reading of barcodes, QR codes, RFID or other identification code types.

The recording of disassembly and/or assembly steps may include at least some captured images and/or measurements for quality assurance, future joint troubleshooting and/or for use in combination with future joint performance parameters to inform continual improvements in procedures, limits and /or parameters used during assembly of bolted flanged joints.

The step of providing step-by-step instructions to operator and monitoring the bolted flange joint during assembly may include modifying the instructions based on the monitoring of the bolted flanged joint during assembly. For example, the instructions may be modified to correct misalignment sensed by flange gap sensors. The instruction may be modified to overcome joint misalignment inferred by non-uniform nut or bolt head rotation. The instructions may be modified to account for mechanical interaction. Accounting for mechanical interaction may permit the use of lower accuracy tools for individual steps, faster load control, reduced tightening passes, all resulting in fast, efficient and reliable joint assembly control.

The step of providing step-by-step instructions to operator and monitoring the bolted flange joint during assembly may include issuing instruction to stop if joint assembly becomes abnormal or if an unsafe situation is detected. The joint assembly may become abnormal for example, when a measured parameter exceeds a predefined limit. One example is when misalignment cannot be corrected using predefined correcting load limit for bolt or bolts tightened when correcting the misalignment. Another example is when nut rotation is not within predefined bounds or nut rotation is significantly different from the average nut rotation for that joint or similar joints. An example of an unsafe situation that may be detected is an operator is within a risk area when a bolt tightening operation is about to begin, or has hands at a possible pinch point.

Another aspect of the invention provides a method for the control and monitoring of the assembly of a bolted flanged joint, the bolted flanged joint including a first flange having a first sealing surface, a second flange having a second sealing surface and at least four bolts, the method including the steps of: measuring at three or more points around the flange a flange gap between the first flange and the second flange to obtain a respective three or more flange gap measurements; calculating from the three or more flange gap measurements an initial misalignment between the first flange and the second flange or between the first sealing surface and the second sealing surface. If the initial misalignment is greater than a predetermined magnitude of misalignment, then: determining from the initial misalignment which of the at least four bolts is the first bolt to tighten (for example, the first bolt to tighten should be the best bolt to tighten first in order to correct the misalignment rather than being simply the first bolt in a standard bolt tightening pattern); setting an initial tightening torque or tightening load for a bolt tightening or tensioning tool; indicating the first bolt to tighten using a bolt assembly pattern indicator; beginning initial tightening of the first bolt; monitoring nut or bolt head rotation to check for issues and halting joint assembly (and therefore halting tightening of the bolt) if issues detected; monitoring the flange gap measurements; if the monitoring of the flange gap measurements indicates that the misalignment has been corrected, then commencing a standard bolt tightening pattern by indicating a second bolt to tighten based on the standard pattern; if the monitoring of the flange gap measurements indicates that the misalignment has not been corrected when the initial tightening torque or tightening load is reached on the first bolt, then measuring the flange gap at the three or more points around the flange to obtain a respective three or more flange gap measurements, calculating a current misalignment then determining from the current misalignment which of the at least four bolts is the second bolt to tighten (for example the second bolt to tighten should be the best bolt to tighten next in order to correct the misalignment, rather than following a standard bolt tightening pattern), then repeating the indicating, tightening and monitoring steps of the first bolt for the second bolt, then if misalignment has not been corrected after at least one third or one quarter of the bolts have been initially tightened, halting joint assembly. If the misalignment is less than the predetermined magnitude of misalignment, then commencing a standard bolt tightening pattern.

The step of measuring at three or more points around the flange a flange gap between the first flange and the second flange to obtain a respective three or more flange gap measurements may alternatively be measuring the gap between the first sealing surface and the second sealing surface.

Another, alternative aspect of the invention provides a method for the control and monitoring of the assembly of a bolted flanged joint, the bolted flanged joint including a first flange having a first sealing surface, a second flange having a second sealing surface and at least four bolts, the method including the steps of: measuring at three or more points around the flange a gap between the first flange and the second flange to obtain a respective three or more gap measurements; calculating an initial misalignment between the first flange and the second flange or between the first sealing surface and the second sealing surface. If the initial misalignment is greater than a first threshold misalignment, then: determining from the initial misalignment which of the at least four bolts is the first bolt to tighten (for example, the first bolt to tighten should be the best bolt to tighten first in order to correct the misalignment rather than being simply the first bolt in a standard bolt tightening pattern); setting an initial tightening torque or tightening load for a bolt load applicator or high speed powered wrench (for reference, these may also be known as a bolt tightening or tensioning tool); indicating the first bolt to tighten using a bolt assembly pattern indicator; beginning initial tightening of the first bolt; monitoring the gap at at least one of the three or more points around the flange. If the monitoring of the gap indicates that a current misalignment is less than a second threshold that is lower than the first threshold misalignment during tightening of the first bolt, then measuring the gap at at least three points around the flange to obtain a respective three or more gap measurements, calculating a current misalignment and if less than the first threshold, indicating initial bolt tightening of the first bolt is complete, then commencing (or resuming) a standard bolt tightening pattern. If the monitoring of the gap indicates that a current misalignment is still greater than a second threshold that is lower than the first threshold misalignment when the initial tightening torque or tightening load is reached on the first bolt, then measuring the gap at at least three points around the flange to obtain a respective three or more gap measurements, calculating a current misalignment then: if the current misalignment is less than the first threshold, then resuming standard bolt tightening pattern by indicating a second bolt to tighten based on a standard tightening pattern; if the current misalignment is still greater than the first threshold, determining from the current misalignment which of the at least four bolts is the second bolt to tighten (for example the second bolt to tighten should be the best bolt to tighten next in order to correct the misalignment, rather than following a standard bolt tightening pattern), then repeating the indicating, tightening and monitoring steps of the first bolt for the second bolt. If the initial misalignment is less than the first threshold misalignment, then commencing or resuming a standard bolt tightening pattern.

The step of commencing or resuming a standard bolt tightening pattern may be largely determined by the recommendations in ASME PCC-1-2019 "Guidelines for Pressure Boundary Bolted Flange Joint Assembly", but may for example be modified based on the bolts required for correcting misalignment of the joint (if any) before resuming tightening in a more standard pattern. However, if no bolts are used to correct misalignment and the first bolt to be tightened is at the commencement of a standard bolt tightening pattern consistent with the aforementioned ASME guidelines document, such a standard bolt tightening pattern can be modified by the addition of steps such as continuation of the monitoring of the assembly parameters to detect potential problems and can use different numbers of passes, different tightening torques and use nut or bolt rotation to determine when to switch between bolt order patterns.

The step of resuming standard bolt tightening pattern may further include the steps of: indicating then tightening each of a first four of the bolts to the initial tightening torque or load; once the first four of the bolts has been tightened to the initial tightening torque or load, measuring the flange gap at at least one point to obtain a current flange gap measurement, setting a second torque or load for the bolt tightening or tensioning tool for initial tightening of a second four of the bolts that is higher than the initial tightening torque or load; indicating and beginning initial tightening of each of the second four of the bolts; monitoring nut or bolt head rotation and/or bolt elongation to check for issues and halt tightening if issues detected; once the second four of the bolts has been tightened to the second tightening torque or load, measuring the flange gap at at least one point to obtain a current flange gap measurement, setting a third torque or load for the bolt tightening or tensioning tool for initial tightening of a final four or the remainder of the bolts that is higher than the second tightening torque or load; indicating and beginning initial tightening of each of the final four or the remainder of the bolts; monitoring nut or bolt head rotation and/or bolt elongation to check for issues and halting joint assembly if issues detected.

After tightening the first four bolts, the second four bolts and/or the third four or remaining bolts the step of measuring the flange gap at at least one point to obtain a current flange gap measurement may optionally be replaced with or supplemented by measuring the elongation and/or load in the respective bolts and/or all bolts.

The step of resuming standard bolt tightening pattern may further include the steps of: once the final four or remainder of the bolts has been tightened to the third tightening torque or load, optionally measuring the flange gap at at least one point to obtain a current flange gap measurement, then; setting a final torque or load for the bolt tightening or tensioning tool for final tightening of all of the at least four bolts; indicating and beginning final tightening of each of the bolts in turn (in a pattern specified, which for clarity is indicated bolt by bolt); monitoring nut or bolt head rotation and/or bolt elongation to check for issues and halting joint assembly if issues detected; else continuing with tightening of all of the at least four bolts until nut or bolt head rotation no longer occurs and/or until bolt elongation measurement indicates the target bolt load has been achieved. Preferably, a final tightening pass step may be performed on each bolt at the target torque or load on each bolt, until the nuts no longer turn. Alternatively, the elongation or load of each bolt may be measured and a final pass only made if or while the elongation or load measurements are outside of tolerance.

This may essentially be a final tightening pass around all of the bolts. Additional steps such as additional passes may be inserted before the final tightening torque or load is applied. For example, after each bolt has had their various initial tightening torques or loads applied (of the initial, second or third tightening torque or load) an intermediate tightening torque can be applied to all bolts, then a gap measurement taken before setting the final tightening torque or load.

Alternatively, the step of resuming standard bolt tightening pattern may further include the steps of: applying a first tightening torque or load to a first group of at least one quarter of the bolts, the first tightening torque being a first proportion over a target tightening torque or load; applying a second tightening torque or load to a second group of at least one quarter of the bolts (the bolts in the second group may preferably not include any of the bolts of the first group), the second tightening torque being a second proportion over the target tightening torque or load, the second proportion being less than (may be approximately half of) the first proportion; applying the target tightening torque or load to a final group of the remainder of the bolts; continuing with tightening of all of the at least four bolts until nut or bolt head rotation no longer occurs and/or until bolt elongation measurement indicates the target bolt load has been achieved. (Preferably the final group of the remainder of the bolts does not include any of the bolts in the first or second groups).

The load may be varied for each bolt such that the mechanical interaction results in all bolt loads being the same after completion of the tightening pass. Additionally, there may be more than three steps of load increment. For example, in the extreme, each individual bolt load could be varied, although more practically, applying load in at least pairs would help prevent misalignment. Also it should be noted that the proportion of load above the target load may preferably be limited to ensure that the loads generated at all stages during tightening are limited to a value below that which can be tolerated by the weakest component in the joint.

The second proportion may be approximately half of the first proportion, or any other amount that is less than the first proportion. The second proportion may be calculated in dependence on the joint mechanical interaction characteristics, as ideally may the first proportion be calculated in dependence on the joint mechanical interaction characteristics.

When the second group of the bolts are tightened, the first group of the bolts relax in load. When the final group or remainder of the bolts are tightened to the target torque or load, the second group of the bolts may relax to substantially the target torque or load and the first group of the bolts may further relax to substantially the target torque or load. At least a final tightening step may be performed on each bolt at the target torque or load on each bolt, until the nuts no longer turn. Alternatively, the elongation or load of each bolt may be measured and a final pass only made if or while the elongation or load measurements are outside of tolerance.

The method may further include, prior to the steps of measuring at three or more points around the flange a flange gap and calculating an initial misalignment, the steps of: cleaning and/or inspecting the joint; halting assembly if inspection is outside of predetermined limits; and storing data for reference. For example, the step of inspecting the joint may include the steps of: measuring the flatness (and optionally also the defect depth) of the first and second flange sealing surfaces; storing the flatness (and optional defect depth) measurements (which may be used for future reference); and/or pausing or halting assembly of the joint if the measured flatness (or optional defect depth) is out of bounds.

The method may further include, prior to the steps of measuring at three or more points around the flange a flange gap and calculating an initial misalignment, the steps of: identifying a gasket to be installed, validating the identification of the gasket, pausing or halting assembly of the joint if the validation of the gasket fails or indicates incorrect parts; and/or identifying the bolts to be installed, validating the identification of the bolts, pausing or halting assembly of the joint if the validation of the bolts fails or indicates incorrect parts.

The step of identifying the gasket to be installed may include the step of video recognition of the gasket or of reading of an identification code or size and/or class markings on the gasket. The code could be an RFID tag or a bar code or QR code or similar. The step may be or further include capturing and storing an image of the gasket. During disassembly of the joint, an image of the used gasket from the joint may be captured and stored, for example, for failure analysis and/or continual improvement of gasket selection.

The step of identifying the bolts to be installed may include the step of video recognition of the bolts or reading of an identification code or size and class markings on the bolts.

The bolt applicator may include a backup wrench and a torque wrench and/or high speed powered wrench, the step of tightening the first bolt may include the step of monitoring the backup wrench and or a nut or bolt head rotation of the first bolt. Indeed, any step of tightening of any bolt, not just the first bolt, may include the step of monitoring the backup wrench and/or nut or bolt head rotation of the associated or respective bolt.

The step of monitoring the backup wrench may include video monitoring of a mechanical backup wrench. The video monitoring may watch for movement of the backup wrench or for visual indication of either magnitude of reaction torque or range of reaction torque.

Alternatively, the step of monitoring the backup wrench may include video monitoring of an electronic backup wrench. The video monitoring may allow a visual indication either magnitude of reaction torque or range of reaction torque. For example, different ranges of reaction torque may be indicated by different colour lights or different numbers of lights.

Alternatively, the step of monitoring the backup wrench may include monitoring the output of a reaction torque sensor. The monitoring may preferably be data acquisition of a signal from the reaction torque sensor.

The method may further include the step of pausing or halting assembly of the joint whenever monitoring of the backup wrench, load, nut rotation and/or flange gap indicates an issue with the joint assembly.

The method may further include, prior to the step of setting a torque or load for the bolt load applicator, the step of visual recognition of the bolt load applicator or of capturing or reading an identifying tag or mark on the bolt load applicator. Similarly, each bolt load applicator may be uniquely identified and the identification stored.

The method may further include the step of continual video monitoring of the area around the joint and pausing or halting assembly if personnel are within an area of risk adjacent around the joint. This may be used to ensure people are out of the line of fire should a loaded item slip or become detached from the assembly or the line of fire of escaping process fluid under pressure from the joint during disassembly. It may also be used to ensure that operators fingers are not near equipment that could operate suddenly or near a pinch point. This continual video monitoring may also be used to verify that tools are operating hands-free to avoid the operator being in the immediate vicinity.

The method may further include the step of using the bolt load applicator with a bolt in an on-site test fixture including a load cell, to obtain the nut factor for the bolt prior to commencing assembly of the joint. Obtaining the nut factor in this manner reduces the inaccuracy of the bolt load obtained using torque and may also be used to identify problems with the nut, bolt or level of lubricant applied. Using the same tool, operator, joint type and bolt type as used in the joint assembly of the method can allow the nut factor to be used for similar joints using similar bolts without the need for retesting, at least for substantially identical joints assembled during one shift or one day.

The method may further include at least one of the following documenting steps: storing data from the monitoring steps of the joint assembly; video recording each assembly step to store video of operations, components and personnel involved in the joint assembly; video recording each assembly step, then extracting and storing images of operations, components and personnel involved in the joint assembly; capturing and storing images of assembly steps, components used (such as, for example, bolts and gaskets) and personnel involved; storing key parameters such as tensioned bolt loads, turn of nut for each bolt, gap closure at multiple points around the flanged joint; and/or storing results of any quality inspections made during joint assembly. The data may also be used to monitor assembly personnel competency via review of the assembly process. Assembly personnel may be required to be proven to be competent for various tasks via periodic review of historic assembly data and video evidence.

Documents, data, images, video, parameters or results of tests may be used from at least one of the documenting steps together with subsequent operating performance of the tensioned bolted flanged joint to then provide improvements in procedures and in parameters used during assembly. The parameters can include the calculations of target torque or load, magnitudes of misalignment or misalignment thresholds, flange flatness and defect limits and the like.

It should be understood that the present invention applies to pressure boundary bolted joints, which are more complex to assemble than other joints, such as structural bolted joints. In the case of structural bolted joints, misalignment only applies to the initial fit-up of the joint, since once the flanges come into metal-metal contact, there is no likelihood of subsequent misalignment. Conversely, for pressure boundary bolted joints, there is gasket compression and flange deformation which occurs throughout the assembly process, meaning it is possible for the joint to become misaligned in the latter stages of assembly if the gasket fails or there is a fault condition such as contact between the flanges that should not ordinarily occur. In addition, due to these sources of deformation that do not exist or are far less significant in a structural bolted joint, there is no significant mechanical interaction between the bolts during assembly of a structural bolted joint as compared to a pressure boundary bolted joint. Mechanical interaction on pressure boundary bolted joints adds significant time and cost to the joint assembly process, requiring up to 10 passes of tightening. This means that an ability to reduce the effect of mechanical interaction, as provided by the present invention, offers significant advantage for assembly of pressure boundary joints.

The lack of significant mechanical interaction means that monitoring of the flange gap is only to confirm that the flanges are brought into full contact prior to commencing final tightening of the joint (correcting initial misalignment) for structural bolted joints, whereas in the case of the pressure boundary bolted joints, monitoring of the flange gap can identify not only initial misalignment problems, but uniformity of gap closure during the latter stages of assembly can also identify other assembly faults, such as gasket failure, gasket location error and flange contact error. Similarly, in the case of structural bolted joints, monitoring of nut or bolt head rotation can only be used to determine the level of applied bolt load, whereas in the case of pressure boundary bolted joints, the Turn-of-Nut relates not only to the amount of bolt stretch, but also to the gasket compression and flange deformation. Therefore, measuring Turn-of-Nut on a pressure boundary bolted joint can be used to give a fault condition of a diverse range of errors, such as initial joint misalignment, assembled joint misalignment, seized nuts, poor lubrication, bolt yield, gasket failures or flange contact errors.

It will be appreciated that the at least four bolts may include eight bolts, twelve bolts or more. A second four of the at least four bolts can be a different four bolts to a first four of the at least four bolts, thereby inherently providing at least eight bolts. Alternatively, the second four bolts may include one or more bolts of the first four bolts, thereby allowing for, say, six bolts or more.

### BRIEF DESCRIPTION OF DRAWINGS

In the drawings:
Figure 1 is an exploded view of a bolted flanged joint as an example of one possible joint to which the invention may be applicable.
Figure 2 is a sectional view of a bolted flanged joint as another example of one possible joint to which the invention may be applicable.
Figure 3 is a schematic diagram of a system according to one or more embodiments of the present invention.
Figure 4 is a flow diagram of a process or method according to one or more embodiments of the present invention.
Figure 5 is a flow diagram of an initial alignment phase of a process or method according to one or more embodiments of the present invention.
Figure 6 is a flow diagram of a standard tightening phase of a process or method according to one or more embodiments of the present invention.

### DESCRIPTION OF PREFERRED EMBODIMENT

The following description and drawings are of examples of the present invention. It is to be understood that the invention is not limited to or by the following description. The term "bolted flanged joint" used herein is intended to include pressure boundary bolted joints.

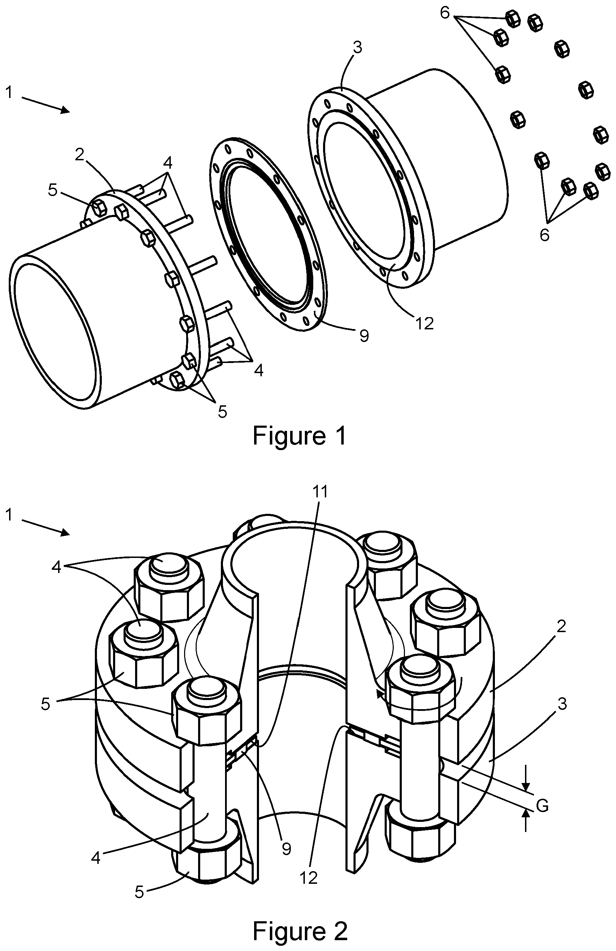

Referring now to Figure 1, an example of a bolted flanged joint 1 is shown in exploded view. The example shown has twelve bolts 4 around the joint, passing through the first flange 2, the gasket 9 and the second flange 3. The first flange 2 has a first sealing surface which is not visible in Figure 1, but the second flange 3 has a sealing surface 12. The twelve bolts 4 in this example each include a bolt head 5 and are fastened by a respective nut 6.

The previously referenced American Society of Mechanical Engineers (ASME) document PCC-1-2019 defines among many things, numbering of bolts in the joint and their tightening sequence. Therefore, the tightening sequence for the bolts in the joint, which is referred to herein as part of a "standard bolt tightening pattern", is not discussed in detail herein since it is detailed in the ASME document.

Figure 2 is a cut-away or partial section view of another bolted flanged joint 1, but the bolts 4 in this example are different. Only eight are used and they are of the stud bolt type, i.e. they do not include a bolt head, but are fastened or tensioned using a nut 6 on each side of the flanged joint 1. The gasket 9 is seated between the first sealing surface 11 of the first flange 2 and the second sealing surface 12 of the second flange 3.

The flange gap G can be a measure of a gap between the first and second flanges, usually towards an outer edge of the flanges, so not necessarily between the first and second sealing surfaces. The flange gap is monitored in the present invention primarily to ensure that the first and second flanges are not angularly misaligned. The system can potentially also monitor other misalignment, such as, for example, the radial misalignment between the first and second flanges.

Embodiments of the present invention address issues with prior joint assembly methods and systems by monitoring all of the critical parameters of joint assembly (bolt load, applied load, turn of nut or bolt head, joint misalignment and flange gap closure) concurrently during assembly to indicate if the assembly is unacceptable as early as possible during the process, such that the problems can immediately be rectified. The entirety of the parameters, or measurements taken, are sufficient to indicate if the joint assembly is acceptable, eliminating the need for the leak test and the risk of not identifying a problem until the leak test or afterwards due to operational leakage.

For example, if there are eight bolts in a flange and, during assembly, the nuts on six of the bolts rotate two turns at the applied torque and the nuts on the other two bolts rotate only one turn at the applied torque, this is an indication that there is a problem with the threads on the bolt or nut and that less than 50% of the load has been achieved in the problematic bolts. At that point, the problematic bolts may be removed, replaced or repaired and reassembled, resulting in all eight bolts being tightened correctly, whereas currently with only torque or tension load control alone, such an assembly would have resulted in one quarter of the assembled bolts being severely underloaded, in spite of the correct torque or tension being applied.

Similarly, currently the accuracy of torque assembly is limited by nut factor variability (variability of friction between the nut, bolt and flanges), such that the accuracy of a torque controlled assembly will be, at best, ±30% and, at worst, ±50% (in cases where poor lubrication procedures, or bolt or nut defects, or poor torque wrench calibration exist). By testing the nut factor (obtained load from applied torque relationship) at the joint assembly location, using the actual bolts and nuts to be assembled, with the actual tool performing the assembly, the same operator operating the tool, the actual batch of lubricant being applied and the same amount of lubricant being applied by the operator, the level of accuracy of torque control can be improved to, at best, ±20% and, at worst ±30%, which represents a significant improvement in load control. This improvement is due to being able to detect if defects exist for the components being used, if the torque wrench is out of calibration, or the incorrect torque wrench is being used, the effect of temperature on the lubricant, or if poor lubrication practices exist. The applied torque can be adjusted higher to overcome minor defects or the defects can be corrected prior to joint assembly.

Embodiments of the present invention also improve the safety of bolted joint assembly by ensuring the correct components are installed, reducing the risk of operational leakage via improved assembly accuracy and quality assurance and allowing the system to eliminate risky operator habits (such as placing their hand at a pinch point) by visually requiring the operator to be clear of the tool prior to the application of load to the tool.

Embodiments also improve the speed of assembly by allowing the use of higher tool loading for intermediate assembly passes and/or the use of less accurate but higher speed tools, in order achieve a much faster joint assembly compared to current methods.

Embodiments can also improve safety by recording the joint assembly parameters for each joint, which allows improvement of the acceptance limits for joint assembly parameters over time, by comparing joints identified as borderline for a given parameter with frequency of later operational leakage data. This can help with safety in the long term.

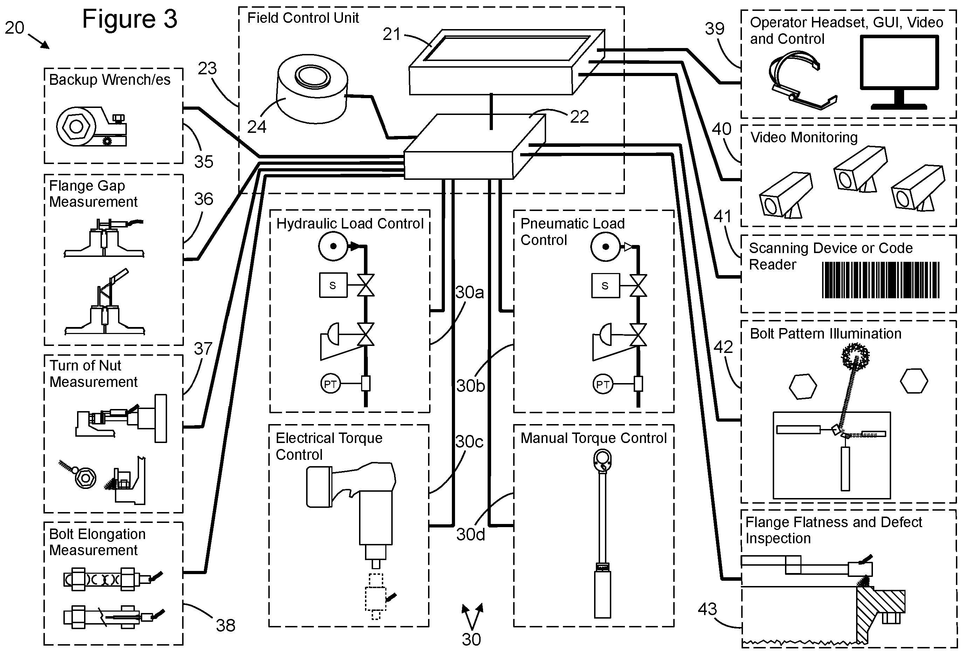

Figure 3 shows an example of a system 20 according to at least one embodiment of the present invention, for the control and monitoring of the assembly of a bolted flanged joint. The assembly is controlled from a portable electronic processor 21 such as a computer, tablet, handheld device or smart phone. The portable electronic processor 21 is connected to a data acquisition and control unit 22, e.g. to enable instruments to be connected or sensor inputs to be received and control signals to be sent.

Instruments can optionally be connected directly to the portable electronic processor 21 by wired or wireless connections including Local Area Network (LAN), Wide Area Network (WAN), Internet of Things (IoT) or Bluetooth^{®} connections or any other known types of connections.

The control signals can also optionally be sent directly by the portable electronic processor 21 to devices such as tightening tools and displays, again either by wired or wireless connections including LAN, WAN, (IoT) or Bluetooth^{®} connections or any other known types of connections.

Preferably, the portable electronic processor 21 and the data acquisition and control unit 22 are part of a field control unit 23 which preferably also includes a load cell test sensor 24. The provision of the load cell test sensor 24 in the field control unit 23 enables pre-assembly of the joint or at least bolts of the joint to allow on-site testing of application of bolt load by using the load cell test sensor to verify bolt load achieved. Otherwise, the testing can be done off-site, but on-site testing removes additional variables, by being able to use the parts and the tools in the location they are about to be installed or used. This testing can be used to define parameters for the joint to be assembled, such as for example a nut factor. It can also allow the system and/or operator to ensure that the bolt is correctly lubricated and components are not defective, as well as allowing verification of the calibration of tools or tool controls. It can also allow identification of defects in the bolts, nuts and washers that would reduce the achieved bolt load to below target levels.

The tightening tools used can be collectively described as bolt load applicators 30 and can include pneumatic, electric, hydraulic and manual torque wrenches, or hydraulic tensioners. Also, as torque wrenches, for example, are not quick to use where the nut or bolt head rotation involved is large, they are slow to use for initial stages of tightening, so high speed powered wrenches may also be used to speed up initial tightening of the bolts and they also fall within the category of bolt load applicators. Examples of high speed powered wrenches are electric, hydraulic and pneumatic impact wrenches.

In Figure 3, four alternative example forms of bolt load applicators according to one or more embodiments of the present invention are shown. The bolt load applicators shown collectively use reference numeral 30, but individual examples are shown 30a, 30b, 30c, 30d. For example, in embodiments including a hydraulic load control method, hydraulic load applicator 30a uses pressurised hydraulic fluid from a source such as a hydraulic pump. This hydraulic fluid passes through an actuated shut-off valve, an actuated pressure regulator and a pressure transducer (preferably used via an optional snubber or flow restrictor to protect the pressure transducer from pressure spikes) before being supplied to a hydraulic powered bolt loading device or standard hydraulic tool(s).

Similarly, in a pneumatic load control method according to one or more embodiments of the present invention, pneumatic load applicator 30b uses pressurised gas such as air from a pressurised air source, for example from a compressor or general site supply. This air passes through an actuated shut-off valve, an actuated pressure regulator and a pressure transducer before being supplied to a pneumatic powered bolt loading device or standard pneumatic tool(s).

In an electrical torque control method according to one or more embodiments of the present invention, an electrical load applicator 30c can be used, such as an electrical torque wrench or a nut runner.

Optionally, a torque sensor (shown in dashed lines) can be used, which can be built into the torque wrench or nut runner, or can be external. For example, the electrical torque wrench inherently includes some form of torque sensing so can include a torque sensor providing an output signal relating to tightening torque. In addition to such inbuilt torque sensing, an external torque sensor can be provided in series with the torque wrench. Alternatively, the nut runner may have a torque sensor built in and/or an external torque sensor can be used in series with the nut runner. Preferably, when the tightening device used is electrically powered, the optional torque sensor is provided to give feedback of tightening torque to a control or monitoring system or arrangement.

In a manual torque control method according to one or more embodiments of the present invention, a manual bolt load applicator 30d such as a standard manual torque wrench can be used.

Although only illustrated in the electrical load applicator example 30c, a torque sensor can optionally be provided with or as part of any of the bolt load applicators 30 to give feedback of tightening torque to a control or monitoring system or arrangement.

Each tool used throughout the system is preferably identified by the portable electronic processor using one or more cameras 40 or scanners or code readers 41 to verify that it is suitable and to/or to record the tools used during the assembly operation for reference. Such identification can include shape recognition based using the cameras 40 or can be by reading of a code such as a bar code or QR code by the cameras 40 or by another scanning device 41, or can be by reading of an RFID tag using a suitable device, or by any other known form of identification that can be applied to tools.

Where torque wrenches or impact wrenches are used to engage the nut or bolt head at one end of a bolt, a backup wrench 35 is required for the nut at the other end of the bolt. The system monitors the backup wrench as load or torque is applied to the bolt. This can be by one or more cameras watching for movement, by an LED indicator which may be detected by a camera, or by one or more backup wrench state signals transmitted to the portable electronic processor such as by measuring the reaction torque generated in the backup wrench.

When the flanges of the joint are initially presented, prior to tightening of the bolts beginning, any angular misalignment can be detected using at least three flange gap sensors 36, which can be physical, such as an LVDT or magnetic strip vernier, or optical such as for example using a laser reflecting off an angled mirror as is well known or any other known similar physical or optical arrangements.

The nut or bolt head rotation sensor 37 can also be physical, such as an RVDT or similar, or optical. An example of optical sensing of bolt head rotation can be a visual indication by movement of a laser beam.

The bolt tension or elongation sensor 38 can measure elongation mechanically, using a strain gauge based arrangement such as illustrated in the applicant's United States Patent 10,316,881, or using ultrasonic measurement of the elongation, optical elongation measurement, mechanical elongation measurement (such as using strain gauges), or similar. The elongation can be used to calculate the tension or load in the loaded portion of the bolt, or the sensor may include calibration for the particular type and size of bolt and output a load reading.

An operator remote interface 39 such as a headset and/or graphical user interface (GUI), although optional, is shown in Figure 3 connected to the portable electronic processor to allow the operator to send and receive control signals or other information without needing to remain with the portable electronic processor. The GUI may also provide or record video and/or provide control such as via a mouse or touch screen.

Cameras 40, such as video cameras and even still cameras can be provided to enable multiple functions, from recording the assembly operation steps and parts used, to identifying parts and tools used to allow them to be verified before use. This is one possible way that the system can ensure that only correct parts and tools can be used. They can also be used to monitor steps or view tools or sensors that are in unsafe or potentially hazardous areas and to ensure that operators are clear of unsafe or hazardous areas prior to assembly operations such as tool operation.

One or more scanning device or code reader 41 can optionally be provided to read codes or tags on parts and/or tools to assist with verification of the correct part or tool and also record serial numbers of parts and/or tools to more comprehensively identify parts and/or tools used. The tags can, for example, be RFID tags and the codes can for example be bar codes, QR codes or alpha-numeric codes. Other arrangements of identifiers and readers can also be used. The identifiers (codes or tags or similar) can be on tools, on parts (such as individual components or sub-assemblies) or on or near the joint to identify the joint being assembled or disassembled (although spatial coordinates such as geotags or global positioning data can also be used).

To avoid the need to individually identify each joint and attach an identification tag to each joint in a plant (which can number over 300,000 joints per plant), one or more embodiments can use the exact location of the joint (obtained from survey or 3D geometric design model) as the identifier. One or more embodiments of the assembly system can incorporate a combination of global positioning (for example using a Global Navigation Satellite System or GNSS) or wireless transmission network and triangulation or trilateration in order to determine the joint based on geospatial location. For example, the use of real-time kinematic positioning allows determination of the position of the joint to within centimetres, which is sufficiently accurate to determine the identity of the joint, even in congested areas where joints may be located within 10cm of each other. The positioning effectiveness can be further enhanced through the use of orientation data and video image recognition to identify the exact joint to be worked on.

The bolt assembly pattern indicator 42 preferably includes a light or laser that can be used to illuminate just the bolt to be tightened. It can use different colours or patterns of flashes, for example, to indicate whether the bolt is still be to tightened, or if the particular tightening stage is complete. A galvanometer scanner, which is an arrangement of actuators to control one or more mirrors, can be used to direct the beam of the light or laser onto the required bolt. Alternatively, or in addition, two electric rotary actuators may be used to direct the light source as needed. Multiple bolt assembly pattern indicators can be provided to enable each bolt in the joint to be selectively illuminated. The beam of light can be generated by one or more light emitting diodes (LEDs) or by any other known means.

The flange flatness scanner or flange flatness and defect sensor 43 can allow the condition of the flange sealing surface to be assessed. If the condition of the flange sealing surface is within allowable parameters, the joint assembly can continue, but the condition as measured by the flange flatness scanner or flange flatness and defect sensor 43 can be stored for later reference. If the condition of the flange sealing surface is outside the allowable parameters, the risk of failure can be too high and the joint assembly can be halted until the defects are corrected.

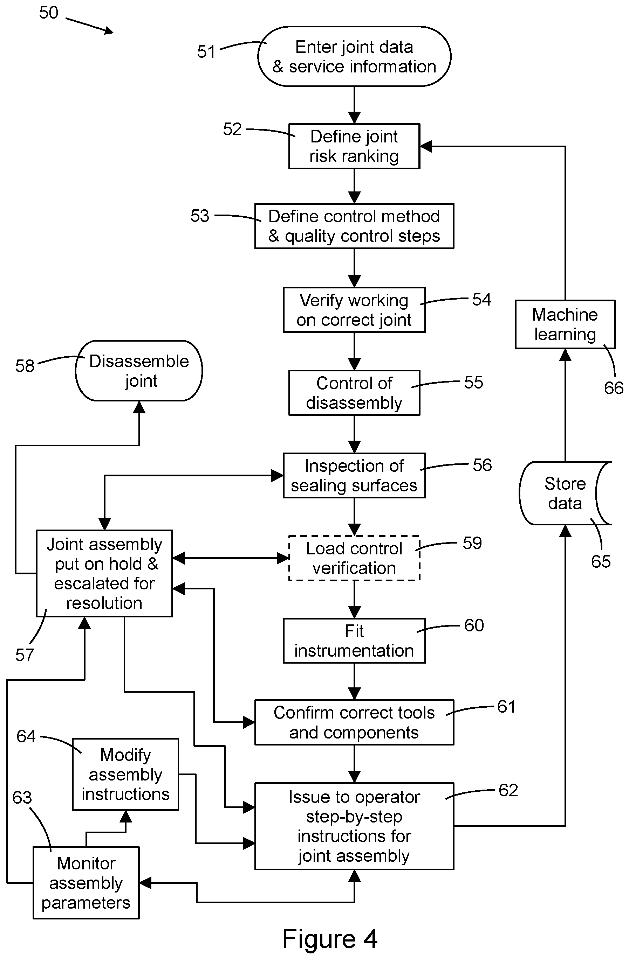

The method or process flow diagram of Figure 4 shows an example of a method or process 50 on a bolted flange joint such as those shown as examples in Figures 1 and 2. In the initial step 51, which in this example is an enter joint data and service information step, the details of the joint are entered. The joint details preferably include pipe, bolt, flange, gasket, location and rating details and the service information such as age of joint and at least some of its component parts and other life details.

The joint data and service information allows a risk ranking to be calculated for the joint in the define joint risk ranking step 52. The risk ranking can be further refined by using data from a machine learning step 62, which can for example compare joint leakage incidents with flange assembly records in order to improve on joint assembly limits and quality control.

Having determined the risk ranking, it is possible to progress to define control method and quality control steps 53. For example, the bolt load control method can be based on measurement of torque, tension or elongation. The quality control steps can be for example, whether to measure nut rotation and/or flange gap or other parameters during assembly if the risk of leakage from the joint is higher, or to at the simplest if the risk ranking is lower just limit or control tightening torque when assembling the joint. For example, it can often be decided to not measure bolt load directly if the risk ranking does not dictate that more precise load control is necessary. Similarly, whether or not to perform a detailed inspection of the flange sealing surfaces can be decided based on the risk ranking.

Before commencing work physically on the joint, the verify working on correct joint step 54 can be taken to ensure that the joint an operator is about to work on is the intended joint.

If the joint is currently assembled, then the disassembly step 55 can be used to lead the operator through joint disassembly steps, including stepped torque if required. Stepped torque is the partial reduction in torque of some bolts before any bolts are fully loosened. The removed parts, such as gasket(s) and bolts, can optionally be individually identified and recorded as can the condition of such removed parts. For example, photos and/or measurements of the removed gasket can be recorded.

With the joint disassembled, the inspection of flange sealing surfaces step 56 can include measurement of flange flatness and can include detection and/or measurement of defects. If the inspection measurements (such as of flatness and defects) are outside of acceptable limits, then joint assembly can be put on hold 57 and escalated for resolution. Engineering input can be used to determine severity and any fix required until the issues are resolved. Such input can be facilitated by remote video connection.

Once the flange sealing surfaces pass inspection, the halted or paused joint assembly can be resumed. Preferably, assembly parameters are tested in-situ to determine or verify the nut factor for example. Such verification of load control functionality is done in a testing application of bolt load step such as load control verification step 59 and typically involves applying load against a load verification load cell test sensor to verify the load achieved. If the results are out of normal ranges, once again the assembly can be put on hold 57 until any problems are resolved or until load verification is successful.

The fit instrumentation step 60 can be performed before, or as shown in Figure 4, after the load control verification step 59. The fit instrumentation step 60 can include the fitting of quality control and assurance instrumentation which can include any of video monitoring, backup wrench monitoring, flange gap measurement, turn of nut measurement and/or bolt elongation measurement.

The confirm correct tools and components step 61 provides confirmation of correct joint components (such as the correct gasket) and correct tightening tools which can be performed by video recognition of shape or stamping, or can be performed by other means such as a scanner or reader for identifiers such as barcodes, QR codes or RFID tags. This can allow for not only confirmation of the correct tool being used, but also the identification of a specific tool or batch of gaskets, so if a tool or component is subsequently found to have a problem, possibly affected joints can be tracked. If an incorrect or problematic component or tool is detected, the method or process and again divert to the joint assembly put on hold 57. This confirmation of correct tools and components step 61 can also include an inspection of the gasket surfaces to ensure that it is not damaged prior to installation.

The joint assembly is directed by the next step, the issue to operator step-by-step instructions for joint assembly step 62. Here step-by-step instructions are issued and can vary in response to feedback. For example, as the bolts are being tightened initially, the standard bolt tightening pattern can be modified to overcome misalignment of the joint detected, for example, by flange gap measurements. Similarly, the instructions can be joint assembly can be put on hold 57 or a possible problem flagged as being indicated by uneven turn of nut as detected, for example, by turn of nut measurements.

The step-by-step instructions can also be modified, for example by deliberate initial over-tightening of initially tightened bolts to account for mechanical interaction as the other bolts are subsequently tightened. This can allow the use of lower accuracy, faster load control means (bolt load applicators such as high speed powered wrenches or nut runners) and less tightening passes, resulting in faster joint assembly.

During assembly, parameters are monitored in the monitor assembly parameters step 63. This is partially to provide feedback to the assembly instructions and allow parameters or instructions to be adjusted to achieve uniform gasket compression and joint alignment. The monitoring of assembly parameters also allows any problems to be flagged and the joint assembly put on hold 57. The joint assembly can be halted or paused, not only if abnormalities are detected, but also if safety is detected as being compromised. For example, the video cameras can be used to ensure that the operator is not in the line-of-fire and is not in danger from a potential pinch point.

Some detected problems or concerns that see the joint assembly put on hold 57 and escalated for resolution can be resolved for example by approving a deviation having analysed the situation. However, it can be necessary to disassemble the joint 58 to be able to rectify the problem instead of returning to the assembly steps. For example, misalignment may be unable to be satisfactorily corrected, or the deformation of gaskets or flanges can indicate poor material properties below specification.

According to one or more embodiments, any or all of the assembly steps, measurement data, other parameters and video can be recorded and the data stored 65 for later troubleshooting, if required. This data can be used to improve future joint assembly parameter setting and processes, such as via the machine learning step 66. For example, joint leakage incidents can be compared with joint assembly records to improve on joint assembly limits and quality control.

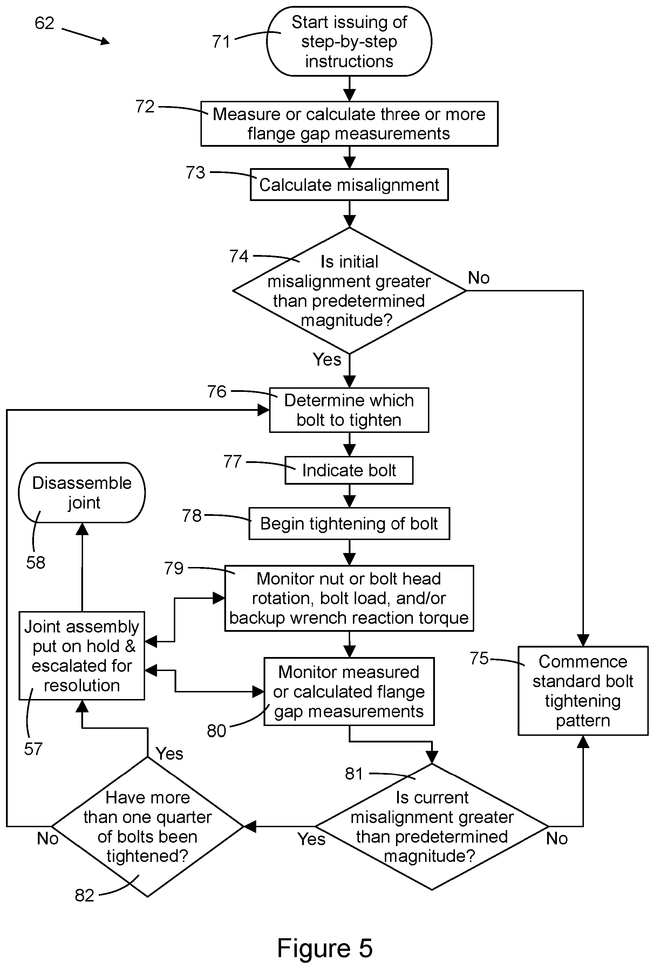

According to one or more embodiments, Figure 5 shows a more detailed example of the step-by-step instructions step 62 of Figure 4. Upon starting the issuing of step-by-step instructions step 71, three or more flange gap measurements are obtained in the measure or calculate three or more flange gap measurements step 72. For example, the flange gaps can be measured directly by measurements taken around the periphery of the flange. Alternatively, if for example flange gap measurement sensors are not installed, the flange gap measurement can be indirect as it can be calculated from other parameters such as turn-of-nut.

By monitoring nut rotation, the resulting turn-of-nut is an indirect measure of both the flange gap and the bolt elongation. Large variations around the joint indicates an issue such as seized nut, poor lubrication, bolt yield, gasket failure, flanges "hanging up" on each other, or joint misalignment. The flanges can "hang up" on each other when sometimes there is a tongue that fits into a recess and if they are misaligned the load goes through the metal, rather than the gasket. When the joint is misaligned, it can take a high bolt load to bring the joint into alignment, then the gasket will not be compressed as much and the turn-of-nut will vary around the joint.

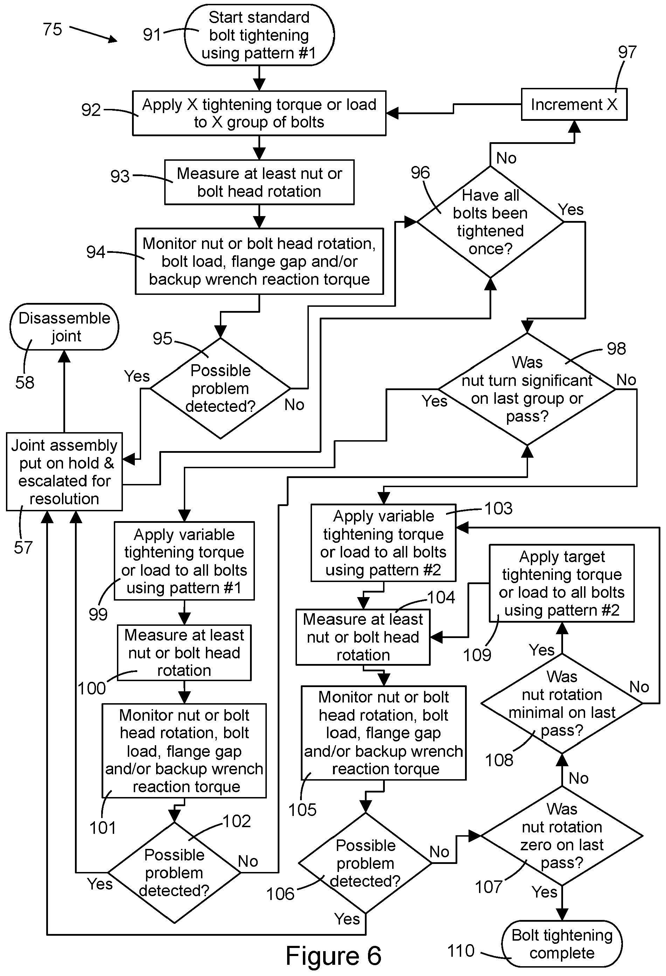

The direct or indirect (measured or calculated) flange gap measurements can be used to calculate misalignment 73. If the misalignment is within acceptable limits, then the initial misalignment test 74 "Is initial misalignment greater than predetermined magnitude?" will be negative so a standard bolt tightening pattern step 75 can be commenced. The standard bolt tightening pattern can be following a bolt tightening order as defined in ASME PCC-1-2019 "Guidelines of Pressure Boundary Bolted Flange Joint Assembly" but preferably includes continuation of the monitoring of the assembly parameters to detect potential problems and can use different numbers of passes and different tightening torques, as shown later in relation to Figure 6.

With respect to one or more embodiments relating to Figure 5, the predetermined magnitude of misalignment in the initial misalignment test is preferably a first threshold misalignment. If the initial misalignment test 74 is positive, i.e., the joint is detected to be misaligned, having a greater misalignment than the predetermined magnitude, so then the direction of misalignment can be used to determine which bolt to tighten 76 next.

That next determined bolt is then indicated 77, preferably by directing a light source such as a light emitting diode (LED) or laser to illuminate the desired bolt. The operator then begins tightening of the bolt 78. While the bolt is being tightened, one or more parameters are monitored in the monitor nut or bolt head rotation, bolt load, and/or backup wrench reaction torque step 79. For example, a minimal amount of sensing can be measurement of the nut or bolt head rotation. From this the turn-of-nut can be used to calculate an indirect measure of bolt load and flange gap and these indirect measures can be monitored during tightening of the bolt.

If the bolt load is measured indirectly, such as by torque or tension measurement, then the use of the load control verification step performed in Figure 4, providing in-situ calibration data, can remove some potential inaccuracies of such indirect measurement of bolt load. The monitoring of backup wrench reaction torque for torque tightening can pick up on poor lubrication or a seized nut.

Monitoring flange gap can allow detection of gasket failure, gasket off-centre, and flanges hanging-up, as well as misalignment issues to be detected. With gasket failure, there can be more compression in one location versus another, so it can be indicated by non-uniform gap closure.

Once the tightening of the bolt is complete for the current tightening pass, the monitoring of the measured or calculated flange gap measurements 80 can be used to re-evaluate misalignment in the current misalignment test 81. If the current misalignment is less than a predetermined magnitude, which can be a second threshold which can be lower than the first threshold misalignment, then the standard bolt tightening pattern step 75 can be commenced.

If the current misalignment is greater than the predetermined magnitude, then a progress test 82 is used to determine whether continued misalignment is acceptable given the progress stage of the joint assembly. In the progress test 82, if no more than one quarter of the bolts of the joint have been tightened and the misalignment remains, the flange gap measurements are used to once again determine which bolt to tighten 76 and the assembly continues.

However, if in the progress test 82 it is determined than more than one quarter of the bolts have been tightened and the misalignment remains, then joint assembly is put on hold 57. The progress test 82 can use a different threshold to the example of one quarter of the bolts, so the use of one quarter as an example is nonlimiting. When the joint assembly is put on hold 57 the problem is escalated for resolution. Typically, unless someone approves a deviation, resolution is only possible by disassembling the joint and rectifying the cause of the problem, so the disassemble joint step can end the current joint assembly step-by-step-instructions.

According to one or more embodiments, Figure 6 shows an example of a standard bolt tightening pattern step 75 of the present invention. While in the present invention a standard bolt tightening pattern can utilise the bolt tightening order defined in the previously referenced ASME PCC-1-2019, significant variations can be employed such as accelerating the tightening process through deliberate initial over-tightening of groups of bolts and improving joint assembly reliability by monitoring assembly parameters.

The bolt tightening pattern can begin with starting the standard bolt tightening pattern step 91 using a first bolt order pattern such as a start or cross pattern. An X tightening torque or load is applied to an X group of bolts 92 which for a first action is a first tightening torque or load applied to a first group of bolts. The first tightening torque or load is preferably a first proportion over a target tightening torque or load. The bolts of the first group are preferably indicated by illuminating the next bolt to tighten using a similar bolt pattern illumination arrangement to that described above. The pattern defining which bolt in the group of bolts is the next to tighten is typically a star pattern when a single bolt load applicator is used. While the X tightening torque or load is applied to the X group of bolts, it is preferable to measure at least one assembly parameter, preferably to measure at least nut or bolt head rotation 93. The measured parameter(s) allow other assembly parameters to be derived, so it is then possible to monitor nut or bolt head rotation, bolt load, flange gap and/or backup wrench reaction torque 94.

The monitored parameters allow possible problems to be detected 95. If a possible problem is detected, the standard bolt tightening pattern is put on hold 57 and can be escalated for resolution, which may require disassembly of the joint 58 and the end of the current assembly process. However, if all the X group of bolts are tightened to the X tightening torque or load, then the test is made whether all bolts have been tightened once each 96. If not then the value of X is incremented 97, i.e., X becomes X+1 and the new value of X is used in the apply tightening torque or load step 92. For example, after the first group of bolts (when X=1) has been tightened to the first tightening torque or load without problems, then the value of X is increased by 1, so then X=2. Then the step "apply X tightening torque or load to X group of bolts" 92 becomes "apply a second tightening torque or load to a second group of bolts". This second tightening torque or load is a second proportion over the target tightening torque or load. The second proportion can be less than (for example approximately half of) the first proportion.

Again, while the second (or X) tightening torque or load is applied to the second (or X) group of bolts, it is preferable to measure at least one assembly parameter, preferably to measure at least nut or bolt head rotation 93. Other assembly parameters can then be derived, so it is possible to monitor nut or bolt head rotation, bolt load, flange gap and/or backup wrench reaction torque 94 and allow possible problems to be detected 95. If problems are detected, then the assembly can be put on hold 57 or the joint disassembled 58. But if no possible problems are detected 95, then the test is made whether all bolts have been tightened once each 96. If not, then the process increments X 97 by one and repeats until the last group or all remaining bolts have been tightened.

However, if all bolts have been tightened once each, then a decision can be made on whether to use the first tightening pattern or a second tightening pattern. For example, if there was significant rotation of at least one nut during the initial tightening of the last group of bolts then intermediate passes of tightening can be required using the first tightening pattern, or a similar pattern which is still essentially a star or cross pattern. So, if the test whether there was significant nut rotation of any bolt during the last group or pass 98, (in this case the final group) is positive, the intermediate passes can start. Typically, the intermediate passes apply a variable tightening torque to all bolts using a first pattern 99, using a higher than target tightening torque or load for the first bolt or first group of bolts, then reducing the tightening torque or load down to using the target torque or load on the final bolt of the joint.

Again, during this intermediate pass, it is preferable to measure at least one assembly parameter, preferably to measure at least nut or bolt head rotation 100. Other assembly parameters can then be derived, so it is possible to monitor nut or bolt head rotation, bolt load, flange gap and/or backup wrench reaction torque 101 and allow possible problems to be detected 102. If problems are detected, then the assembly can be put on hold 57 or the joint disassembled 58. But if no possible problems are detected 102, then the test is made whether there was significant nut rotation of any bolt during the last pass 98, in this case an intermediate pass. There can still be significant nut rotation if the gasket is quite compressible, so the intermediate pass can be repeated until the test whether there was significant nut rotation of any bolt during the last pass 98 is negative.

When the test whether there was significant nut rotation of any bolt during the last pass 98 is negative, all bolts can be tightened using a second pattern, which can be a star or cross pattern but is preferably a circular pattern. Typically, the tightening torque is varied, being higher than the target torque at the start of the pass, reducing to target torque by the last bolt in the pass. During the apply variable tightening torque to all bolts using a second pattern 103, it is preferable to measure at least one assembly parameter, preferably to measure at least nut or bolt head rotation 104. Other assembly parameters can then be derived, so it is possible to monitor nut or bolt head rotation, bolt load, flange gap and/or backup wrench reaction torque 105 and allow possible problems to be detected 106.

If problems are detected, then the assembly can be put on hold 57 or the joint disassembled 58. But if no possible problems are detected 106, then the test is made whether nut rotation of all bolts was zero during the last pass 107. If there was any nut rotation, then a further test is made whether nut rotation was minimal 108 during the previous pass. If the rotation was not minimal, then the loop through the tightening torque step 103 can be repeated. If the nut rotation during the previous pass was minimal 108, then a final application of target torque to all bolts using the second pattern 109 can be made.

While the target tightening torque or load is applied to all the bolts using the second pattern 109, it is again preferable to measure at least one assembly parameter, preferably to measure at least nut or bolt head rotation 104. As previously, the measured parameter(s) allow other assembly parameters to be derived, so it is then possible to monitor nut or bolt head rotation, bolt load, flange gap and/or backup wrench reaction torque 105. This allows possible problems to be detected 106. If any possible problems are detected, the joint assembly is put on hold 57 and escalated for resolution. But if no possible problems are detected, then the test is made whether nut rotation of all bolts was zero during the last pass 107. If nut rotation was not zero on the past pass 107 then the text is made whether nut rotation was minimal and if it was, the apply target torque or load to all bolts using the second pattern 109 is repeated. But if the nut rotation was zero 107 then bolt tightening is complete 110.

Alternatively, the standard bolt tightening pattern 75 can use a slower process than the accelerated tightening procedure described above. So, in the slower process, the first group of bolts (typically four to six bolts) is tightened to a first tightening torque or load that is only twenty to thirty percent of the target torque or load. That is, when X is one in the process 92 shown in Figure 6, the X tightening torque applied is the first tightening torque which is twenty to thirty percent of the target torque or load. Monitoring of nut or bolt head rotation, bolt load, flange gap and/or backup wrench reaction torque 94 during this first tightening action allows checking for issues and if a problem is detected 95 the assembly can be put on hold 57 or halted and the joints disassembled 58 if necessary.

The check whether all bolts have been tightened once 96 returns the process to the application of torque or load via the increment X step 97. The second tightening action is then to apply a second tightening torque or load to a second group of bolts 92. The second tightening torque or load is typically between fifty and seventy percent of the target tightening torque or load. The second group of bolts typically includes four to six bolts and the tightening order is preferably in a star pattern as is known. Monitoring of nut or bolt head rotation, bolt load, flange gap and/or backup wrench reaction torque 94 during this second tightening action allows problems to be detected 95. The check whether all bolts have been tightened once 96 returns the process to the application of torque or load via the increment X step 97.

For a third tightening action, a third tightening torque or load is applied to a third group of bolts 92. The third group of bolts is preferably the remaining bolts and the third tightening torque is load is preferably one hundred percent of the target tightening torque or load. However, at this point, if required, additional groups can be used and/or more actions taken before all bolts are tightened. For example, the remaining bolts can be tightened to a torque or load that is between the second tightening torque or load and the target tightening torque or load. Then the flange gap can be measured or flange gap measurements can be derived from other parameters, to check for example that the compression of the gasket is within an expected range.

Monitoring of nut or bolt head rotation, bolt load, flange gap and/or backup wrench reaction torque 94 during this third tightening action allows problems to be detected 95. But if no possible problems are detected 95, then the test is made whether all bolts have been tightened once each 96. If not, then the process increments X 97 by one and repeats until the last group or all remaining bolts have been tightened. As previously described herein, once all bolts have been tightened, the test whether there was significant nut rotation of any bolt during the last group or pass 98 is made, determining which tightening pattern to follow and the process through the steps numbered 99 to 109 are the same as previously described.

In any of the assembly processes according to one or more embodiments of the present invention, where the next bolt to be tightened is indicated, preferably by illumination of the bolt, when the operator moves to the bolt, the system confirms that the operator is at the correct bolt using video recognition for example. This improves quality control by providing a verification that the process is being executed as intended.

The process and/or method of one or more embodiments of the present invention can automate the process of a "Go/No-go" decision based on monitored parameters. For example, absolute (i.e., actual measured) or derived parameters such as bolt load and flange gap measurement can be used to determine misalignment and to detect components that are not performing within specification. As an example, a flange gap should close up to within a predicted tolerance with less than 30% of the load applied. If it doesn't, then the assembly process is stopped and the misalignment issue must be resolved. Similarly, the nut or bolt head rotation and gap measurement may also be used to detect gaskets that are not performing to specification, (i.e., they compress too easily or not enough, due to poor construction or the use of weak materials) and to detect faulty flanges (which for example have to low a yield due to poor material properties). Monitoring assembly parameters throughout the assembly process can allow detection and prevention of operator error (such as incorrect parts, processes or incorrect tools) installation of faulty components and other installation problems such as joint misalignment. The present invention also permits more rapid installation through calculated over tightening of initial bolts if required. Thus, the present invention provides for improved joint assembly speed with improved joint assembly reliability and installation safety.

One or more forms of the present invention may provide a system for control and monitoring of the assembly of a bolted flanged joint, the bolted flanged joint including a first flange, a second flange and at least four bolts, the system including: at least one bolt load applicator, at least three flange gap sensors, at least two video cameras, and a portable electronic processor including inputs for the sensors and outputs for transmitting or indicating joint assembly parameters, and at least one of the following additional sensors: a nut or bolt head rotation sensor, and/or a bolt tension and/or elongation sensor.

The portable electronic processor may include one or more of a portable computer, a laptop, a tablet, a phone, a bespoke electronic device or multiple electronic devices such as a tablet in wired or wireless communication, directly and/or via any form of network, with a data acquisition device and at least one output device such as a display or indicator. The portable electronic processor may provide instruction and allow feedback from the operator using a portable headset and/or remote control or pendant. The portable electronic processor may be, at least selectively, in wired or wireless communication via any form of network with one or more sources and/or repositories of data.

The portable electronic processor may evaluate data from the inputs to flag a joint as acceptable or rejected and if rejected may define issues and prevent assembly from continuing until the issues are resolved and/or provide parameters to assist with troubleshooting and problem solving. The portable electronic processor data, including video, may be used to provide remote support to the operator in order to determine the best course of action to mitigate the issues.

One or more embodiments may include the at least one bolt load applicator being a hydraulic tensioner. The at least one bolt load applicator may include at least one torque wrench and at least one backup wrench. The torque wrench may be hydraulic, pneumatic, electrically (for example battery) or manually operated. The torque wrench may include a torque output sensor or a torque output sensor may be provided between the torque wrench and the bolt. The torque of the hydraulic or pneumatic torque wrenches may be regulated by control of a supply pressure to the torque wrench. The electrically operated torque wrench may be battery powered, or powered by a wired connection to electrical power from the system or from an external supply. The torque of the electrically operated torque wrench may be regulated by control of a supply or operating current and/or voltage.

The torque of the electrically operated torque wrench may be regulated within the torque wrench, with the desired torque setting communicated to the wrench by the portable electronic processor or entered by the operator and verified by for example an image capture and verified by the portable electronic processor. Alternatively, the torque of the torque wrench may be regulated based on a sensed or calculated torque on the bolt. Preferably, the torque of the torque wrench may be regulated based on a sensed or calculated load in the bolts.

The backup wrench may allow continuous rotation of an engaged nut or bolt head of the bolt. The applicant's backup wrench has this functionality of allowing continuous rotation above a pre-set reaction torque and is detailed in Unites Stated patent application publication number 2020/0206883. The backup wrench may be electronic. For example, the electronic backup wrench may measure a reaction torque and output the measured reaction torque. Alternatively, the electronic backup wrench may provide a visual indication of reaction torque being below, within or above a pre-set range of reaction torque, or a visual indication of reaction torque being above a pre-set reaction torque.

Embodiments may include the at least three flange gap sensors including three or four flange gap sensors. Alternatively, the at least three flange gap sensors may comprise more than four flange gap sensors. For example, around a large flange, five, or more preferably six or seven, or more preferably eight or more flange gap sensors may be used. One or each of the at least three flange gap sensors may provide a signal indicative of a measurement from a respective flange gap sensor. The flange gap sensor may be a linear position sensor, for example, a linear variable differential transformer (LVDT) or a magnetic strip vernier. Alternatively, the flange gap sensor may be a visual measurement or provide a visual indication or confirmation. For example, one of the at least three cameras may be used to view a gap around the first and second flanges and either operator or electronic processor determination or estimation of the gap can then be made. The camera may view a region onto which a laser beam is projected onto a mirror at an angle of incidence of forty-five degrees to multiply the gap closure by a factor of two, although larger angles can be used to increase the multiplier and hence make it easier and more accurate to read. Other arrangements are also possible such as interference patterns between grids projected from two lasers aimed at the viewing region such as a screen.

Embodiments may include the at least two video cameras including at least three video cameras. Preferably, the at least two video cameras may include four or more video cameras. More cameras allow all sides of the joint to be covered and at least one of the video cameras may also be used or may be exclusively used for part identification. The at least two or three video cameras may record moving images or a series of time-separated stills or a motion detection triggered or assembly procedure step triggered still image or series of still images to show for example critical stages of the assembly procedure, or parts and/or tools and settings used. One or more still cameras may be used, for example to provide higher quality still images.

Embodiments may include the at least one additional sensor including a nut or bolt head rotation sensor. The at least one additional sensor may include a bolt elongation sensor for sensing load in each bolt as it is being tensioned or multiple elongation sensors for sensing load in each bolt. The bolt elongation sensor may be mechanical, ultrasonic, visual or similar. The at least one additional sensor may include a nut or bolt head rotation sensor and at least one elongation sensor for sensing elongation in each of either: at least one quarter of the bolts where the at least four bolts is less than or equal to thirty-two bolts; or in at least eight of the bolts when the at least four bolts is greater than 32 bolts. In this case, the at least one elongation sensor may be used for sensing load in each of preferably at least one quarter or more preferably in at least half, or optionally in more than half of the number of the at least four bolts when the flange has 32 bolt or less, or when the flange has more than 32 bolts, for sensing load in at least eight of them.

One or more embodiments of the present invention may include a load cell such as a load cell test sensor. The load cell may preferably be used to test a bolt during pre-assembly of a corresponding joint on-site to determine a more accurate setting for the applied torque or tension. The corresponding joint is preferably substantially identical to the or each bolted flanged joint to be assembled following the pre-assembly test using the load cell. If the applied torque or tension to achieve a target bolt load is outside of the bounds of expected values when tested in a fixture including the load cell, then this may be used as a quality control measure, indicating a problem with the bolt, nut, flange to nut contact surface or improper application of the lubrication.

One or more embodiments may include at least one additional component selected from the following: a high speed powered wrench, a bolt assembly pattern indicator, and/or a flange flatness sensor or a flange flatness and defect sensor. Embodiments may include a high speed powered wrench which may be preferable when the bolt load applicator includes a torque wrench. The high speed powered wrench may be a pneumatic-powered impact wrench. Alternatively, the high speed powered wrench may be a hydraulic-powered impact wrench. A supply or operating pressure or a maximum torque of the pneumatic or hydraulic powered impact wrench may be regulated, for example for both pressure and time. Alternatively, the high speed powered wrench may be an electrically-powered impact wrench or torque wrench. For example, the electrically-powered impact or torque wrench may be battery-powered. A supply or operating current and/or voltage or a maximum torque of the electrically-powered torque wrench may be regulated, and in the case of an electrically powered impact wrench, may be regulated against time. The high speed powered wrench may be used for initial stages of assembly and for disassembly of the bolted flanged joint as it can be significantly faster for tightening a bolt than using a more precise torque wrench or load controlled method. More precise torque wrench or load control methods would be used for final tightening passes.

One or more embodiments may include at least one bolt assembly pattern indicator. For example, the portable electronic processor may include a display indicating which bolt, of the at least four bolts around the flange, to tighten. The display can also show when the required tension is reached in the bolt. Alternatively, the bolt assembly pattern indicator may for example, preferably be a light or a laser that illuminates the bolt to be tightened. It may illuminate the bolt with a single colour, or with a first colour when needing to be tightened and a second colour when the desired tension has been achieved in the said bolt. Alternatively, it may illuminate the bolt with a single colour, but may change from a steady illumination to flashing to convey the different messages of bolt to be tightened and bolt at desired tension.

One or more embodiments may include a flange flatness scanner or a flange flatness and defect sensor. The flange flatness and defect sensor may include a flange flatness and defect measurement arm using mechanical or optical profile measurement, or some combination of both. The flange flatness and defect measurement arm may preferably be used to inspect the flange seating surfaces and automatically compare them to acceptable limits for the joint. Any inspection results from use of the flange flatness and defect measurement arm may be stored to facilitate failure analysis.

One or more embodiments may include a code reader (for example, as one of the inputs of the electronic processor). The code reader may be a bar code reader, QR code reader or RFID tag reader. The code reader may be provided instead of or complementary to any video camera or still camera part identification.

One or more forms of the present invention may provide a method for the control and monitoring of the assembly of a bolted flanged joint, the bolted flanged joint including a first flange having a first sealing surface, a second flange having a second sealing surface and at least four bolts, the method including the steps of: defining a risk ranking for the bolted flanged joint; defining a bolt load control type and quality control steps for the assembly of the bolted flanged joint in dependence on the risk ranking; controlling and monitoring disassembly of the bolted flanged joint; inspecting the first and second sealing surfaces; testing application of bolt load using load cell test sensor to verify bolt load achieved; installing instrumentation at the bolted flanged joint; confirming correct part ID and correct components and tightening tools are used; providing step by step instructions to operator and monitoring the bolted flange joint during assembly; recording disassembly and/or assembly steps.

The step of testing application of bolt load using load cell test sensor to verify bolt load achieved may be used to define parameters for the joint to be assembled, such as for example a nut factor. It may also allow the system and/or operator to ensure that the bolt is correctly lubricated and components are not defective, as well as allowing verification of the calibration of tools or tool controls. It may also allow identification of defects in the bolts, nuts and washers that would reduce the achieved bolt load to below target levels.

The step of installing instrumentation at the bolted flanged joint may include the installation of instrumentation such as cameras and flange gap sensors which can be used for multiple purposes including feeding information, such as part ID or feature measurements, into the control and for monitoring of the assembly to assist with or allow assembly process control, quality control and assurance and safety.

The steps of confirming the correct part identifications and correct components and tightening tools (such as the bolt load applicators) are used may be based on video recognition of a shape or marking of a part or tool, or on code reading of barcodes, QR codes, RFID or other identification code types.

The recording of disassembly and/or assembly steps may include at least some captured images and/or measurements for quality assurance, future joint troubleshooting and/or for use in combination with future joint performance parameters to inform continual improvements in procedures, limits and /or parameters used during assembly of bolted flanged joints.

One or more embodiments may include providing step by step instructions to operator and monitoring the bolted flange joint during assembly, optionally including modifying the instructions based on the monitoring of the bolted flanged joint during assembly. For example, the instructions may be modified to correct misalignment sensed by flange gap sensors. The instruction may be modified to overcome inadequate nut or bolt head rotation. The instructions may be modified to account for mechanical interaction. Accounting for mechanical interaction may permit the use of lower accuracy tools for individual steps, faster load control, reduced tightening passes, all resulting in fast, efficient and reliable joint assembly control. Providing step by step instructions to operator and monitoring the bolted flange joint during assembly may include issuing instruction to stop if joint assembly becomes abnormal or if an unsafe situation is detected. The joint assembly may become abnormal for example, when a measured parameter exceeds a predefined limit. One example is when misalignment cannot be corrected using predefined correcting load limit for bolt or bolts tightened when correcting the misalignment. Another example is when nut rotation is not within predefined bounds or nut rotation is significantly different from the average nut rotation for that joint or similar joints. An example of an unsafe situation that may be detected is an operator is within a risk area when a bolt tightening operation is about to begin, or has hands at a possible pinch point.

One or more forms of the present invention may provide a method for the control and monitoring of the assembly of a bolted flanged joint, the bolted flanged joint including a first flange having a first sealing surface, a second flange having a second sealing surface and at least four bolts, the method including the steps of: measuring at three or more points around the flange a flange gap between the first flange and the second flange to obtain a respective three or more flange gap measurements; calculating from the three or more flange gap measurements an initial misalignment between the first flange and the second flange or between the first sealing surface and the second sealing surface; if the initial misalignment is greater than a predetermined magnitude of misalignment, then: determining from the initial misalignment which of the at least four bolts is the first bolt to tighten (for example, the first bolt to tighten should be the best bolt to tighten first in order to correct the misalignment rather than being simply the first bolt in a standard bolt tightening pattern); setting an initial tightening torque or tightening load for a bolt tightening or tensioning tool (i.e. a bolt load applicator); indicating the first bolt to tighten using a bolt assembly pattern indicator; beginning initial tightening of the first bolt; monitoring nut or bolt head rotation to check for issues and halting joint assembly (and therefore halting tightening of the bolt) if issues detected; monitoring the flange gap measurements; if the monitoring of the flange gap measurements indicates that the misalignment has been corrected, then commencing a standard bolt tightening pattern by indicating a second bolt to tighten; if the monitoring of the flange gap measurements indicates that the misalignment has not been corrected when the initial tightening torque or tightening load is reached on the first bolt, then measuring the flange gap at the three or more points around the flange to obtain a respective three or more flange gap measurements, calculating a current misalignment then determining from the current misalignment which of the at least four bolts is the second bolt to tighten (for example the second bolt to tighten should be the best bolt to tighten next in order to correct the misalignment, rather than following a standard bolt tightening pattern), then repeating the indicating, tightening and monitoring steps of the first bolt for the second bolt, then if misalignment has not been corrected after at least one third or one quarter of the bolts have been initially tightened, halting joint assembly; if misalignment has been corrected, then if the misalignment is less than the predetermined magnitude of misalignment, then commencing a standard bolt tightening pattern.

One or more forms of the present invention may provide a method for the control and monitoring of the assembly of a bolted flanged joint, the bolted flanged joint including a first flange having a first sealing surface, a second flange having a second sealing surface and at least four bolts, the method including the steps of: measuring at three or more points around the flange a gap between the first flange and the second flange (or between the first sealing surface and the second sealing surface) to obtain a respective three or more gap measurements; calculating an initial misalignment between the first flange and the second flange or between the first sealing surface and the second sealing surface; if the initial misalignment is greater than a first threshold misalignment, then: determining from the initial misalignment which of the at least four bolts is the first bolt to tighten; setting an initial tightening torque or tightening load for a bolt load applicator or high speed powered wrench (OR bolt tightening or tensioning tool); indicating the first bolt to tighten using a bolt assembly pattern indicator; beginning initial tightening of the first bolt; monitoring the gap at at least one of the three or more points around the flange if the monitoring of the gap indicates that a current misalignment is less than a second threshold that is lower than the first threshold misalignment during tightening of the first bolt, then measuring the gap at at least three points around the flange to obtain a respective three or more gap measurements, calculating a current misalignment and if less than the first threshold, indicating initial bolt tightening of the first bolt is complete, then resuming standard bolt tightening pattern; if the monitoring of the gap indicates that a current misalignment is still greater than a second threshold that is lower than the first threshold misalignment when the initial tightening torque or tightening load is reached on the first bolt, then measuring the gap at at least three points around the flange to obtain a respective three or more gap measurements, calculating a current misalignment then: if the current misalignment is less than the first threshold, then resuming standard bolt tightening pattern by indicating a second bolt to tighten; if the current misalignment is still greater than the first threshold, determining from the current misalignment which of the at least four bolts is the second bolt to tighten, then repeating the indicating, tightening and monitoring steps of the first bolt for the second bolt; if the initial misalignment is less than the first threshold misalignment, then resuming standard bolt tightening pattern.

The step of measuring at three or more points around the flange a flange gap between the first flange and the second flange to obtain a respective three or more flange gap measurements may alternatively be measuring the gap between the first sealing surface and the second sealing surface.

Embodiments may include the resuming standard bolt tightening pattern further including the steps of: indicating then tightening each of a first four of the bolts to the initial tightening torque or load; once a first four of the bolts has been tightened to the initial tightening torque or load, measuring the flange gap at at least one point to obtain a current flange gap measurement, setting a second torque or load for the bolt tightening or tensioning tool for initial tightening of a second four of the bolts that is higher than the initial tightening torque or load; indicating and beginning initial tightening of each of the second four of the bolts; monitoring nut or bolt head rotation and/or bolt elongation to check for issues and halt tightening if issues detected; once the second four of the bolts have been tightened to the second tightening torque or load, measuring the flange gap at at least one point to obtain a current flange gap measurement, setting a third torque or load for the bolt tightening or tensioning tool for initial tightening of a final four or the remainder of the bolts that is higher than the second tightening torque or load; indicating and beginning initial tightening each of the final four or remainder of the bolts; monitoring nut or bolt head rotation and/or bolt elongation to check for issues and halting joint assembly if issues detected; continuing with tightening of all of the at least four bolts until nut or bolt head rotation no longer occurs and/or until bolt elongation measurement indicates the target bolt load has been achieved.

After tightening the first four bolts, the second four bolts and/or the third four or remaining bolts the step of measuring the flange gap at at least one point to obtain a current flange gap measurement may optionally be replaced with or supplemented by measuring the elongation and/or load in the respective bolts and/or all bolts.

Embodiments may include the step of resuming standard bolt tightening pattern further including the steps of: once the final four or remainder of the bolts has been tightened to the third tightening torque or load, measuring the flange gap at at least one point to obtain a current flange gap measurement, setting a final torque or load for the bolt tightening or tensioning tool for final tightening of all of the at least four bolts; indicating and beginning final tightening of each of the bolts in turn; monitoring nut or bolt head rotation and/or bolt elongation to check for issues and halt tightening if issues detected. **If** no issues are detected, then continuing with tightening of all of the at least four bolts until nut or bolt head rotation no longer occurs and/or until bolt elongation measurement indicates the target bolt load has been achieved. Preferably, a final tightening pass step may be performed on each bolt at the target torque or load on each bolt, until the nuts no longer turn. Alternatively, the elongation or load of each bolt may be measured and a final pass only made if or while the elongation or load measurements are outside of tolerance.

This may essentially be a final tightening pass around all of the bolts. Additional steps such as additional passes may be inserted before the final tightening torque or load is applied. For example, after each bolt has had their various initial tightening torques or loads applied (of the initial, second or third tightening torque or load) an intermediate tightening torque can be applied to all bolts, then a gap measurement taken before setting the final tightening torque or load.

Embodiments may include the step of resuming standard bolt tightening pattern further including the steps of: applying a first tightening torque or load to a first group of at least one quarter of the bolts, the first tightening torque being a first proportion over a target tightening torque or load; applying a second tightening torque or load to a second group of at least one quarter of the bolts, the second tightening torque being a second proportion over the target tightening torque or load, the second proportion being less than the first proportion; applying the target tightening torque or load to a final four or a remainder of the bolts; continuing with tightening of all of the at least four bolts until nut or bolt head rotation no longer occurs and/or until bolt elongation measurement indicates the target bolt load has been achieved.

Preferably the final group of the remainder of the bolts does not include any of the bolts in the first or second groups. The load may be varied for each bolt such that the mechanical interaction results in all bolt loads being the same after completion of the tightening pass. Additionally, there may be more than three steps of load increment. For example, in the extreme, each individual bolt load could be varied, although more practically, applying load in at least pairs would help prevent misalignment. Also, it should be noted that the proportion of load above the target load may preferably be limited to ensure that the loads generated at all stages during tightening are limited to a value below that which can be tolerated by the weakest component in the joint.

The second proportion may be approximately half of the first proportion, or any other amount that is less than the first proportion. The second proportion may be calculated in dependence on the joint mechanical interaction characteristics, as ideally may the first proportion be calculated in dependence on the joint mechanical interaction characteristics.

When the second group of the bolts are tightened, the first group of the bolts relax in load. When the final group or remainder of the bolts are tightened to the target torque or load, the second group of the bolts may relax to substantially the target torque or load and the first group of the bolts may further relax to substantially the target torque or load. At least a final tightening step may be performed on each bolt at the target torque or load on each bolt, until the nuts no longer turn. Alternatively, the elongation or load of each bolt may be measured and a final pass only made if or while the elongation or load measurements are outside of tolerance.

One or more embodiments may further include, prior to the steps of measuring at three or more points around the flange a flange gap and calculating an initial misalignment, the steps of: cleaning and/or inspecting the joint; halting assembly if inspection is outside of predetermined limits; and storing data for reference. For example, the step of inspecting the joint may include the steps of: measuring the flatness (and optionally also the defect depth) of the first and second flange sealing surfaces; storing the flatness (and optional defect depth) measurements (which may be used for future reference); and/or pausing or halting assembly of the joint if the measured flatness (or optional defect depth) is out of bounds.

One or more embodiments may further include, prior to the steps of measuring at three or more points around the flange a flange gap and calculating an initial misalignment, the steps of: identifying a gasket to be installed, validating the identification of the gasket, pausing or halting assembly of the joint if the validation of the gasket fails or indicates incorrect parts; and/or identifying the bolts to be installed, validating the identification of the bolts, pausing or halting assembly of the joint if the validation of the bolts fails or indicates incorrect parts.

The step of identifying the gasket to be installed may include the step of video recognition of the gasket or of reading of an identification code or size and/or class markings on the gasket. The code could be an **RFID** tag or a bar code or QR code or similar. The step may be or further include capturing and storing an image of the gasket. During disassembly of the joint, an image of the used gasket from the joint may be captured and stored, for example, for failure analysis and/or continual improvement of gasket selection.

The step of identifying the bolts to be installed may include the step of video recognition of the bolts or reading of an identification code or size and class markings on the bolts.

One or more embodiments may include the bolt load applicator including a backup wrench and a torque wrench and/or high speed powered wrench; the step of tightening the first bolt including the step of monitoring the backup wrench. Any step of tightening of any bolt, not just the first bolt, may include the step of monitoring the backup wrench and/or nut or bolt head rotation of the associated or respective bolt. The step of monitoring the backup wrench may include video monitoring of a mechanical backup wrench. The video monitoring may watch for movement of the backup wrench or for visual indication of either magnitude of reaction torque or range of reaction torque. The step of monitoring the backup wrench may include video monitoring of an electronic backup wrench. The video monitoring may allow a visual indication either magnitude of reaction torque or range of reaction torque. For example, different ranges of reaction torque may be indicated by different colour lights or different numbers of lights. The step of monitoring the backup wrench may include monitoring the output of a reaction torque sensor. The monitoring may preferably be data acquisition of a signal from the reaction torque sensor.

One or more embodiments may further include pausing or halting assembly of the joint whenever monitoring of the backup wrench, load, nut rotation and/or flange gap indicates an issue with the joint assembly.

One or more embodiments may further include, prior to the step of setting a torque or load for the bolt load applicator, visual recognition of the bolt load applicator or of capturing or reading an identifying tag or mark on the bolt load applicator.

One or more embodiments may include continual video monitoring of the area around the joint and pausing or halting assembly if personnel are within an area of risk adjacent around the joint. This may be used to ensure people are out of the line of fire should a loaded item slip or become detached from the assembly or the line of fire of escaping process fluid under pressure from the joint during disassembly. It may also be used to ensure that operators fingers are not near equipment that could operate suddenly or near a pinch point. This continual video monitoring may also be used to verify that tools are operating hands-free to avoid the operator being in the immediate vicinity.

One or more embodiments may include using the bolt load applicator with a bolt in an on-site test fixture including a load cell such as a load cell test sensor, to obtain the nut factor for the bolt prior to commencing assembly of the joint. Obtaining the nut factor in this manner reduces the inaccuracy of the bolt load obtained using torque and may also be used to identify problems with the nut, bolt or level of lubricant applied. Using the same tool, operator, joint type and bolt type as used in the joint assembly of the method can allow the nut factor to be used for similar joints using similar bolts without the need for retesting, at least for substantially identical joints assembled during one shift or one day.

Embodiments may include at least one of the following documenting steps: storing data from the monitoring steps of the joint assembly; video recording each assembly step to store video of operations, components and personnel involved in the joint assembly; video recording each assembly step, then extracting and storing images of operations, components and personnel involved in the joint assembly; capturing and storing images of assembly steps, components used and personnel involved; storing key parameters such as tensioned bolt loads, turn of nut for each bolt, gap closure at multiple points around the flanged joint; and/or storing results of any quality inspections made during joint assembly. The data may also be used to monitor assembly personnel competency via review of the assembly process. Assembly personnel may be required to be proven to be competent for various tasks via periodic review of historic assembly data and video evidence.

One or more embodiments may include using at least one of the documenting steps together with subsequent operating performance of the tensioned bolted flanged joint to then provide improvements in procedures and in parameters used during assembly. The parameters can include the calculations of target torque or load, magnitudes of misalignment or misalignment thresholds, flange flatness and defect limits and the like.

## Claims

1. A method (50) for the control and monitoring of the assembly of a bolted flanged joint (1), the bolted flanged joint including a first flange (2) having a first sealing surface (11), a second flange (3) having a second sealing surface (12), a gasket (9) between the first flange and the second flange, and at least four bolts (4) to retain together the flanges and the gasket of the bolted flanged joint when assembled, the method including the steps of:
obtaining (72) directly or indirectly at three or more points around the flanges a flange gap (G) between the first flange and the second flange to determine a respective three or more flange gap measurements;
calculating (73) from the three or more flange gap measurements an initial misalignment between the first flange and the second flange or between the first sealing surface and the second sealing surface;
if (74) the initial misalignment is greater than a predetermined magnitude of misalignment, then:
determining (76) from the initial misalignment which of the at least four bolts (4) is the first bolt to tighten;
setting an initial tightening torque or tightening load for a bolt load applicator (30);
indicating (77) the first bolt to tighten using a bolt assembly pattern indicator (42);
beginning (78) initial tightening of the first bolt;
monitoring (79) nut or bolt head rotation to check for issues and halting (57) joint assembly if issues detected;
monitoring (80) the flange gap measurements;
if (81) the monitoring (80) of the flange gap measurements indicates that the misalignment has been corrected, then commencing (75) a standard bolt tightening pattern by indicating a second bolt (4) to tighten;
if (81) the monitoring (80) of the flange gap measurements indicates that the misalignment has not been corrected when the initial tightening torque or tightening load is reached on the first bolt, then obtaining the flange gap at the three or more points around the flange to obtain a respective three or more flange gap (G) measurements, calculating a current misalignment then determining (76) from the current misalignment which of the at least four bolts (4) is the second bolt to tighten, then repeating the indicating (77), tightening (78) and monitoring (79) steps of the first bolt for the second bolt, then if (81) misalignment has not been corrected after at least one third or one quarter of the bolts (4) have been initially tightened (82), halting (57) joint assembly; if (81) misalignment has been corrected, then commencing (75) a standard bolt tightening pattern;
if (81) the initial misalignment is less than the predetermined magnitude of misalignment, then commencing (57) a standard bolt tightening pattern.

2. The method of claim 1, wherein:
when (74) the initial misalignment is greater than the predetermined magnitude of misalignment, then the predetermined magnitude of misalignment is a first threshold misalignment;
when the monitoring (80) of the flange gap measurements indicates that a current misalignment has been corrected, then the current misalignment is less than a second threshold that is lower than the first threshold misalignment;
when the monitoring (80) of the flange gap measurements indicates that the current misalignment has not been corrected, then the current misalignment is still greater than the second threshold that is lower than the first threshold misalignment.

3. The method of claim 1 or claim 2, wherein the at least four bolts (4) includes at least eight bolts, and wherein the step of resuming standard bolt tightening pattern further includes the steps of:
indicating then tightening each of a first four of the at least eight bolts to the initial tightening torque or load;
once the first four of the at least eight bolts has been tightened to the initial tightening torque or load, obtaining a current flange gap measurement, setting (97) a second torque or load for the bolt tightening or tensioning tool for initial tightening of a second four of the at least eight bolts that is higher than the initial tightening torque or load;
indicating and beginning initial tightening of each of the second four of the at least eight bolts;
monitoring nut or bolt head rotation, flange gap measurement and/or bolt elongation to check for issues and halt tightening (57) if issues detected;
once the second four of the at least eight bolts have been tightened to the second tightening torque or load, obtaining a current flange gap measurement, setting a third torque or load for the bolt tightening or tensioning tool for initial tightening of a final four or a remainder of the at least eight bolts that is higher than the second tightening torque or load;
indicating and beginning initial tightening each of the final four or the remainder of the at least eight bolts;
monitoring (101) nut or bolt head rotation, flange gap measurement and/or bolt elongation to check for issues and halting (57) joint assembly if issues detected;
continuing with tightening of all of the at least eight bolts until (98) nut or bolt head rotation no longer occurs and/or until bolt elongation measurement indicates the target bolt load has been achieved.

4. The method of claim 3, wherein the step of resuming standard bolt tightening pattern may further include the steps of:
once the final four or the remainder of the at least eight bolts has been tightened to the third tightening torque or load, obtaining a current flange gap measurement,
setting a final torque or load for the bolt tightening or tensioning tool for final tightening of all of the at least eight bolts;
indicating and beginning final tightening (109) of each of the at least eight bolts in turn;
monitoring (105) nut or bolt head rotation and/or bolt elongation to check for issues and halt tightening (57) if issues detected.

5. The method of claim 4, wherein the amount of nut or bolt head rotation is monitored during tightening of the final four or the remainder of the at least eight bolts and once the final four or the remainder of the at least eight bolts has been tightened to the third tightening torque or load, then said amount of nut or bolt head rotation is used to determine (98) whether to use a first bolt order pattern for at least one intermediate pass tightening (99) all the at least eight bolts, or to use a second bolt order pattern for at least one penultimate pass tightening (103) all the at least eight bolts, prior to setting a final torque or load for the bolt tightening or tensioning tool for final tightening (109) of all of the at least eight bolts,
the at least one intermediate pass tightening (99) all the at least eight bolts includes monitoring (100) nut or bolt head rotation to determine whether to repeat another intermediate pass using the first bolt order pattern, or to use the second bolt order pattern for at least one penultimate pass tightening (103) all of the at least eight bolts, prior to setting a final torque or load for the bolt tightening or tensioning tool for final tightening (109) of all of the at least eight bolts.

6. The method of claim 1 or claim 2 wherein the step of resuming standard bolt tightening pattern further includes the steps of:
applying (92) a first tightening torque or load to a first group of at least one quarter of the at least four bolts (4), the first tightening torque being a first proportion over a target tightening torque or load;
applying a second tightening torque (97) or load to a second group of at least one quarter of the at least four bolts, the second tightening torque being a second proportion over the target tightening torque or load, the second proportion being less than the first proportion;
applying the target tightening torque or load to a final four or a remainder of the at least four bolts;
continuing with tightening of all of the at least four bolts (4) until nut or bolt head rotation no longer occurs (107) and/or until bolt elongation measurement indicates the target bolt load has been achieved.

7. The method of claim 6, wherein the amount of nut or bolt head rotation is monitored (94) during tightening of the final four or the remainder of the at least four bolts, and once the final four or the remainder of the at least four bolts has been tightened to the target torque or load, then said amount of nut or bolt head rotation is used to determine (98) whether to use a first bolt order pattern for at least one intermediate pass tightening (99) all of the let least four bolts, or to use a second bolt order pattern for at least one penultimate pass tightening (103) all of the at least four bolts, prior to setting a final torque or load for the bolt tightening or tensioning tool for final tightening (109) of all of the at least four bolts
the at least one intermediate pass tightening all of the at least four bolts includes monitoring (101) nut or bolt head rotation to determine whether to repeat another intermediate pass using the first bolt order pattern, or to use the second bolt order pattern for at least one penultimate pass tightening (103) all of the at least four bolts, prior to setting a final torque or load for the bolt tightening or tensioning tool for final tightening (109) of all of the at least four bolts.

8. The method of claim 1 or claim 2 further includes, prior to the steps of obtaining (72) at three or more points around the flange a flange gap and calculating (73) an initial misalignment (74), the steps of:
cleaning and/or inspecting (43, 56) the joint;
halting assembly (57) if inspection is outside of predetermined limits; and
storing (65) data for reference.

9. The method of claim 1 or claim 2 further includes, prior to the steps of obtaining (72) at three or more points around the flange a flange gap and calculating (73) an initial misalignment (74), the steps of:
identifying a gasket to be installed, validating (61) the identification of the gasket (9), pausing or halting assembly (57) of the joint if the validation of the gasket fails or indicates incorrect parts; and/or
identifying the bolts to be installed, validating (61) the identification of the bolts, pausing or halting assembly (57) of the joint if the validation of the bolts fails or indicates incorrect parts.

10. The method of any of claims 1 to 9 wherein the bolt load applicator includes a backup wrench (35) and a torque wrench and/or high speed powered wrench (30);
the step of tightening the first bolt includes the step of monitoring the backup wrench (35).

11. The method of claim 10 wherein the step of monitoring the backup wrench includes at least one of the following:
video monitoring of a mechanical backup wrench;
video monitoring of an electronic backup wrench; and/or
monitoring the output of a reaction torque sensor.

12. The method of claim 10 further includes the step of pausing or halting assembly (57) of the joint whenever monitoring (63) of the backup wrench, load, nut rotation and/or flange gap indicates an issue with the joint assembly.

13. The method of claim 10 further includes, prior to the step of setting a torque or load for the bolt load applicator (30), the step of visual recognition (40) of the bolt load applicator or of capturing or reading (41) an identifying tag or mark on the bolt load applicator.

14. The method of claim 1 or claim 2, including determining (54) identity and location of the bolted flanged joint using geospatial by global positioning or wireless transmission network and triangulation or trilateration.

15. The method of claim 14, further including using bolted flanged joint orientation data and video image recognition to identify the bolted flanged joint.

16. The method of claim 1 or claim 2 further includes the step of continual video monitoring (40) of the area around the joint and pausing or halting assembly (57) if personnel are within an area of risk adjacent around the joint.

17. The method of claim 1 or claim 2 further including the step of using the bolt load applicator (30) with a bolt in an on-site test fixture including a load cell, to obtain the nut factor for the bolt prior to commencing assembly of the joint.

18. The method of claim 1 or claim 2 further including at least one of the following documenting steps:
storing data (65) from the monitoring steps of the joint assembly;
video recording each assembly step to store video of operations, components and personnel involved in the joint assembly;
video recording each assembly step, then extracting and storing images of operations, components and personnel involved in the joint assembly;
capturing and storing images of assembly steps, components used and personnel involved;
storing key parameters such as tensioned bolt loads, turn of nut for each bolt, gap closure at multiple points around the flanged joint; and/or
storing results of any quality inspections made during joint assembly.

19. The method of claim 18 further including using at least one of the documenting steps together with subsequent operating performance of the tensioned bolted flanged joint to then provide improvements (66) in procedures and in parameters used during assembly.

20. The method of claim 1 or claim 2, further including the steps of:
defining (52) a risk ranking for the bolted flanged joint;
defining (53) a bolt load control type and quality control steps for the assembly of the bolted flanged joint in dependence on the risk ranking;
controlling and monitoring disassembly (55) of the bolted flanged joint;
inspecting (56) the first and second sealing surfaces;
testing application of bolt load using load cell test sensor to verify (59) bolt load achieved;
installing instrumentation (60) at the bolted flanged joint (1);
confirming (61) correct part ID and correct components and tightening tools are used;
providing (62) step-by-step instructions to operator and monitoring (63) the bolted flanged joint during assembly;
recording (65) at least some disassembly and/or assembly steps, measurement data and/or video.

21. The method of claim 20 including the step of modifying (64) the step-by-step instructions based on the monitoring (63) of the bolted flanged joint during assembly.

22. The method of any one of claims 3 to 5, including issuing an instruction to stop (57) if joint assembly becomes abnormal or if an unsafe situation is detected.

23. A system for control and monitoring of the assembly of a bolted flanged joint (1), the bolted flanged joint including a first flange (2), a second flange (3), a gasket (9) between the first flange and the second flange, and at least four bolts (4) to retain together the flanges and the gasket of the bolted flanged joint when assembled, the system including:
at least one bolt load applicator (30) to apply a tightening torque or load to the at least four bolts,
a load cell test sensor (24) to calibrate and verify assembly parameters,
a nut or bolt head rotation sensor (37),
at least two video cameras (40) enabling video recognition of at least one of a tool or component shape, a tool or component identification code, a specific bolt being tightened or an unsafe operation or operator position, and
a portable electronic processor (21) including inputs for the sensors and outputs for transmitting or indicating joint assembly parameters, and
at least one of the following additional sensors:
a bolt tension and/or elongation sensor (38) to determine a bolt load,
at least three flange gap sensors (36) to determine a flange gap and any misalignment of the flanges, and
a reaction torque sensor to indicate a magnitude of torque reacted by a backup wrench (35).

24. The system of claim 23 wherein the at least one bolt load applicator (30) is a hydraulic tensioner (30a).

25. The system of claim 23 wherein the at least one bolt load applicator (30) comprises at least one torque wrench and at least one backup wrench (35).

26. The system of claim 23 wherein the assembly parameters include one or more of a flange gap measurement (36), misalignment of the flanges, a tension or load in a bolt, or gasket compression.

27. The system of claim 23, further including a code reader (41).

28. The system of claim 23 wherein the at least one additional sensor includes at least one bolt elongation sensor (38) for sensing load in a respective said bolt (4) as the respective bolt is being tensioned.

29. The system of claim 23 wherein the at least one additional sensor includes at least one elongation sensor (38) for sensing elongation in each of either:
at least one quarter of the bolts where the at least four bolts (4) is less than or equal to thirty-two bolts; or
in at least eight of the bolts (4) when the at least four bolts is greater than 32 bolts.

30. The system of claim 23 or claim 25 further including at least one additional component selected from the following:
a high speed powered wrench,
a bolt assembly pattern indicator (42), and/or
a flange flatness sensor or a flange flatness and defect sensor (43).

## Patentansprüche

1. Verfahren (50) für die Steuerung und Überwachung der Montage einer verschraubten Flanschverbindung (1), wobei die verschraubte Flanschverbindung einen ersten Flansch (2) mit einer ersten Dichtfläche (11), einen zweiten Flansch (3) mit einer zweiten Dichtfläche (12), eine Dichtung (9) zwischen dem ersten Flansch und dem zweiten Flansch und zumindest vier Schrauben (4) beinhaltet, um die Flansche und die Dichtung der verschraubten Flanschverbindung, wenn sie montiert ist, zusammenzuhalten, wobei das Verfahren die folgenden Schritte beinhaltet:
Erhalten (72), direkt oder indirekt an drei oder mehr Punkten um die Flansche, eines Flanschspaltes (G) zwischen dem ersten Flansch und dem zweiten Flansch, um jeweilige drei oder mehr Flanschspaltmessungen zu bestimmen;
Berechnen (73), aus den drei oder mehr Flanschspaltmessungen, einer anfänglichen Fehlausrichtung zwischen dem ersten Flansch und dem zweiten Flansch oder zwischen der ersten Dichtfläche und der zweiten Dichtfläche;
falls (74) die anfängliche Fehlausrichtung größer als eine vorbestimmte Größe der Fehlausrichtung ist, dann:
Bestimmen (76), aus der anfänglichen Fehlausrichtung, welche der zumindest vier Schrauben (4) die erste Schraube ist, die anzuziehen ist;
Einstellen eines anfänglichen Anzugsdrehmoments oder einer anfänglichen Anzugslast für einen Schraubenlastapplikator (30);
Angeben (77) der ersten Schraube, die anzuziehen ist, unter Verwendung eines Schraubenmontagemusterindikators (42);
Beginnen (78) von anfänglichem Anziehen der ersten Schraube;
Überwachen (79) von Mutter- oder Schraubenkopfdrehung, um auf Probleme zu überprüfen, und Anhalten (57) von Verbindungsmontage, falls Probleme detektiert werden;
Überwachen (80) der Flanschspaltmessungen;
falls (81) die Überwachung (80) der Flanschspaltmessungen angibt, dass die Fehlausrichtung korrigiert worden ist, dann Starten (75) eines Standardschraubenanzugsmusters durch Angeben einer zweiten Schraube (4), die anzuziehen ist;
falls (81) die Überwachung (80) der Flanschspaltmessungen angibt, dass die Fehlausrichtung nicht korrigiert worden ist, wenn das anfängliche Anzugsdrehmoment oder die anfängliche Anzugslast an der ersten Schraube erreicht ist, dann Erhalten des Flanschspaltes an den drei oder mehr Punkten um den Flansch, um jeweilige drei oder mehr Messungen von Flanschspalten (G) zu erhalten, Berechnen einer aktuellen Fehlausrichtung, dann Bestimmen (76), aus der aktuellen Fehlausrichtung, welche der zumindest vier Schrauben (4) die zweite Schraube ist, die anzuziehen ist, dann Wiederholen der Schritte des Angebens (77), Anziehens (78) und Überwachens (79) der ersten Schraube für die zweite Schraube, dann, falls (81) Fehlausrichtung nicht korrigiert worden ist, nachdem zumindest ein Drittel oder ein Viertel der Schrauben (4) anfänglich angezogen worden ist (82), Anhalten (57) von Verbindungsmontage; falls (81) Fehlausrichtung korrigiert worden ist, dann Starten (75) eines Standardschraubenanzugsmusters;
falls (81) die anfängliche Fehlausrichtung weniger als die vorbestimmte Größe der Fehlausrichtung ist, dann Starten (57) eines Standardschraubenanzugsmusters.

2. Verfahren nach Anspruch 1, wobei:
wenn (74) die anfängliche Fehlausrichtung größer als die vorbestimmte Größe der Fehlausrichtung ist, dann die vorbestimmte Größe der Fehlausrichtung eine erste Schwellenfehlausrichtung ist;
wenn das Überwachen (80) der Flanschspaltmessungen angibt, dass eine aktuelle Fehlausrichtung korrigiert worden ist, dann die aktuelle Fehlausrichtung weniger als ein zweiter Schwellenwert ist, der niedriger als die erste Schwellenwertfehlausrichtung ist;
wenn das Überwachen (80) der Flanschspaltmessungen angibt, dass die aktuelle Fehlausrichtung nicht korrigiert worden ist, dann die aktuelle Fehlausrichtung immer noch größer als der zweite Schwellenwert ist, der niedriger als die erste Schwellenwertfehlausrichtung ist.

3. Verfahren nach Anspruch 1 oder Anspruch 2, wobei die zumindest vier Schrauben (4) zumindest acht Schrauben beinhalten und wobei der Schritt des Wiederaufnehmens des Standardschraubenanzugsmusters ferner die folgenden Schritte beinhaltet:
Angeben, dann Anziehen von jeder von ersten vier der zumindest acht Schrauben mit dem anfänglichen Anzugsdrehmoment oder der anfänglichen Anzugslast;
sobald die ersten vier der zumindest acht Schrauben mit dem anfänglichen Anzugsdrehmoment oder der anfänglichen Anzugslast angezogen worden sind, Erhalten einer aktuellen Flanschspaltmessung, Einstellen (97) eines zweiten Drehmoments oder einer zweiten Last für das Schraubenanzugs- oder Spannungswerkzeug zum anfänglichen Anziehen von zweiten vier der zumindest acht Schrauben, das/die höher als das anfängliche Anzugsdrehmoment oder die anfängliche Anzugslast ist;
Angeben und Beginnen von anfänglichem Anziehen von jeder der zweiten vier der zumindest acht Schrauben;
Überwachen von Mutter- oder Schraubenkopfdrehung, Flanschspaltmessung und/oder Schraubendehnung, um auf Probleme zu überprüfen, und Anzahlten des Anziehens (57), falls Probleme detektiert werden;
sobald die zweiten vier der zumindest acht Schrauben mit dem zweiten Anzugsdrehmoment oder der zweiten Anzugslast angezogen worden sind, Erhalten einer aktuellen Flanschspaltmessung, Einstellen eines dritten Drehmoments oder einer dritten Last für das Schraubenanzugs- oder Spannungswerkzeug zum anfänglichen Anziehen von finalen vier oder eines Rests der zumindest acht Schrauben, das/die höher als das zweite Anzugsdrehmoment oder die zweite Anzugslast ist;
Angeben und Beginnen von anfänglichem Anziehen von jeder der finalen vier oder dem Rest der zumindest acht Schrauben;
Überwachen (101) von Mutter- oder Schraubenkopfdrehung, Flanschspaltmessung und/oder Schraubendehnung, um auf Probleme zu überprüfen, und Anhalten (57) von Verbindungsmontage, falls Probleme detektiert werden;
Fortfahren mit dem Anziehen von allen der zumindest acht Schrauben, bis (98) keine Mutter- oder Schraubenkopfdrehung mehr auftritt und/oder bis Schraubendehnungsmessung angibt, dass die Zielschraubenlast erreicht worden ist.

4. Verfahren nach Anspruch 3, wobei der Schritt des Wiederaufnehmens von Standardschraubenanzugsmuster ferner die folgenden Schritte beinhalten kann:
sobald die finalen vier oder der Rest der zumindest acht Schrauben mit dem dritten Anzugsdrehmoment oder der dritten Anzugslast angezogen worden sind, Erhalten einer aktuellen Flanschspaltmessung,
Einstellen eines finalen Drehmoments oder einer finalen Last für das Schraubenanzugs- oder Spannungswerkzeug zum finalen Anziehen von allen der zumindest acht Schrauben;
Angeben und Beginnen von finalem Anziehen (109) von jeder der zumindest acht Schrauben nacheinander;
Überwachen (105) von Mutter- oder Schraubenkopfdrehung und/oder Schraubendehnung, um auf Probleme zu überprüfen, und Anhalten von Anziehen (57), falls Probleme detektiert werden.

5. Verfahren nach Anspruch 4, wobei die Menge an Mutter- oder Schraubenkopfdrehung während des Anziehens der finalen vier oder des Rests der zumindest acht Schrauben überwacht wird und, sobald die finalen vier oder der Rest der zumindest acht Schrauben mit dem dritten Anzugsdrehmoment oder der dritten Anzugslast angezogen worden sind, dann die Menge der Mutter- oder Schraubenkopfdrehung verwendet wird, um zu bestimmen (98), ob ein erstes Schraubenreihenfolgemuster für zumindest ein Zwischendurchgangsanziehen (99) von allen der zumindest acht Schrauben zu verwenden ist oder ein zweites Schraubenreihenfolgemuster für zumindest ein vorletztes Durchgangsanziehen (103) von allen der zumindest acht Schrauben zu verwenden ist, bevor ein finales Drehmoment oder eine finale Last für das Schraubenanzugs- oder Spannungswerkzeug zum finalen Anziehen (109) von allen der zumindest acht Schrauben eingestellt wird,
das zumindest eine Zwischendurchgangsanziehen (99) von allen der zumindest acht Schrauben Überwachen (100) von Mutter- oder Schraubenkopfdrehung beinhaltet, um zu bestimmen, ob ein weiterer Zwischendurchgang unter Verwendung des ersten Schraubenreihenfolgenmusters zu wiederholen ist oder das zweite Schraubenreihenfolgenmuster für zumindest ein vorletztes Durchgangsanziehen (103) von allen der zumindest acht Schrauben zu verwenden ist, vor dem Einstellen eines finalen Drehmoments oder einer finalen Last für das Schraubenanzugs- oder Spannungswerkzeug zum finalen Anziehen (109) von allen der zumindest acht Schrauben.

6. Verfahren nach Anspruch 1 oder Anspruch 2, wobei der Schritt des Wiederaufnehmens des Standardschraubenanzugsmusters ferner die folgenden Schritte beinhaltet:
Anwenden (92) eines ersten Anzugsdrehmoments oder einer ersten Anzugslast auf eine erste Gruppe von zumindest einem Viertel der zumindest vier Schrauben (4), wobei das erste Anzugsdrehmoment ein erster Anteil über einem Zielanzugsdrehmoment oder einer Zielanzugslast ist;
Anwenden eines zweiten Anzugsdrehmoments (97) oder einer zweiten Anzugslast auf eine zweite Gruppe von zumindest einem Viertel der zumindest vier Schrauben, wobei das zweite Anzugsdrehmoment ein zweiter Anteil über dem Zielanzugsdrehmoment oder der Zielanzugslast ist, wobei der zweite Anteil weniger als der erste Anteil ist;
Anwenden des Zielanzugsdrehmoments oder der Zielanzugslast auf finale vier oder einen Rest der zumindest vier Schrauben;
Fortfahren mit dem Anziehen von allen der zumindest vier Schrauben (4), bis keine Mutter- oder Schraubenkopfdrehung mehr auftritt (107) und/oder bis Schraubendehnungsmessung angibt, dass die Zielschraubenlast erreicht worden ist.

7. Verfahren nach Anspruch 6, wobei die Menge an Mutter- oder Schraubenkopfdrehung während des Anziehens der finalen vier oder des Rests der zumindest vier Schrauben überwacht wird (94) und, sobald die finalen vier oder der Rest der zumindest vier Schrauben mit dem Zieldrehmoment oder der Ziellast angezogen worden sind, dann die Menge an Mutter- oder Schraubenkopfdrehung verwendet wird, um zu bestimmen (98), ob ein erstes Schraubenreihenfolgemuster für zumindest ein Zwischendurchgangsanziehen (99) von allen der zumindest vier Schrauben zu verwenden ist oder ein zweites Schraubenreihenfolgemuster für zumindest ein vorletztes Durchgangsanziehen (103) von allen der zumindest vier Schrauben zu verwenden ist, bevor ein finales Drehmoment oder eine finale Last für das Schraubenanzugs- oder Spannungswerkzeug zum finalen Anziehen (109) von allen der zumindest vier Schrauben eingestellt wird,
wobei das zumindest eine Zwischendurchgangsanziehen von allen der zumindest vier Schrauben Überwachen (101) von Mutter- oder Schraubenkopfdrehung beinhaltet, um zu bestimmen, ob ein weiterer Zwischendurchgang unter Verwendung des ersten Schraubenreihenfolgenmusters zu wiederholen ist oder das zweite Schraubenreihenfolgenmuster für zumindest ein vorletztes Durchgangsanziehen (103) von allen der zumindest vier Schrauben zu verwenden ist, bevor ein finales Drehmoment oder eine finale Last für das Schraubenanzugs- oder Spannungswerkzeug zum finalen Anziehen (109) von allen der zumindest vier Schrauben eingestellt wird.

8. Verfahren nach Anspruch 1 oder Anspruch 2, ferner beinhaltend, vor den Schritten des Erhaltens (72), an drei oder mehr Punkten um den Flansch, eines Flanschspaltes und des Berechnens (73) einer anfänglichen Fehlausrichtung (74), die folgenden Schritte:
Reinigen und/oder Inspizieren (43, 56) der Verbindung;
Anhalten der Montage (57), falls Inspektion außerhalb von vorbestimmten Grenzen ist; und
Speichern (65) von Daten als Referenz.

9. Verfahren nach Anspruch 1 oder Anspruch 2, ferner beinhaltend, vor den Schritten des Erhaltens (72), an drei oder mehr Punkten um den Flansch, eines Flanschspaltes und des Berechnens (73) einer anfänglichen Fehlausrichtung (74), die folgenden Schritte:
Identifizieren einer zu installierenden Dichtung, Validieren (61) der Identifizierung der Dichtung (9), Pausieren oder Anhalten der Montage (57) der Verbindung, falls die Validierung der Dichtung fehlschlägt oder inkorrekte Teile angibt; und/oder
Identifizieren der zu installierenden Schrauben, Validieren (61) der Identifizierung der Schrauben, Pausieren oder Anhalten der Montage (57) der Verbindung, falls die Validierung der Schrauben fehlschlägt oder inkorrekte Teile angibt.

10. Verfahren nach einem der Ansprüche 1 bis 9, wobei der Schraubenlastapplikator einen Sicherungsschlüssel (35) und einen Drehmomentschlüssel und/oder einen angetriebenen Hochgeschwindigkeitsschlüssel (30) beinhaltet;
der Schritt des Anziehens der ersten Schraube den Schritt des Überwachens des Sicherungsschlüssels (35) beinhaltet.

11. Verfahren nach Anspruch 10, wobei der Schritt des Überwachens des Sicherungsschlüssels zumindest eines des Folgenden beinhaltet:
Videoüberwachen eines mechanischen Sicherungsschlüssels;
Videoüberwachen eines elektronischen Sicherungsschlüssels; und/oder
Überwachen der Ausgabe eines Reaktionsdrehmomentsensors.

12. Verfahren nach Anspruch 10, ferner beinhaltend den Schritt des Pausierens oder Anhaltens der Montage (57) der Verbindung, wann immer Überwachung (63) des Sicherungsschlüssels, der Last, der Mutterdrehung und/oder des Flanschspaltes ein Problem mit der Verbindungsmontage angibt.

13. Verfahren nach Anspruch 10, ferner beinhaltend, vor dem Schritt des Einstellens eines Drehmoments oder einer Last für den Schraubenlastapplikator (30), den Schritt der visuellen Erkennung (40) des Schraubenlastapplikators oder des Erfassens oder Lesens (41) eines identifizierenden Etiketts oder einer identifizierten Markierung auf dem Schraubenlastapplikator.

14. Verfahren nach Anspruch 1 oder Anspruch 2, beinhaltend Bestimmen (54) der Identität und Stelle der verschraubten Flanschverbindung unter Verwendung von Geodaten durch globales Positionierungs- oder drahtloses Übertragungsnetzwerk und Triangulation oder Trilateration.

15. Verfahren nach Anspruch 14, ferner beinhaltend Verwenden von verschraubten Flanschverbindungsorientierungsdaten und Videobilderkennung, um die verschraubte Flanschverbindung zu identifizieren.

16. Verfahren nach Anspruch 1 oder Anspruch 2, ferner beinhaltend den Schritt des kontinuierlichen Videoüberwachens (40) des Bereichs um die Verbindung und des Pausierens oder Anhaltens der Montage (57), falls Personal innerhalb eines Risikobereichs benachbart um die Verbindung ist.

17. Verfahren nach Anspruch 1 oder Anspruch 2, ferner beinhaltend den Schritt des Verwendens des Schraubenlastapplikators (30) mit einer Schraube in einer Vor-Ort-Testbefestigung, die eine Lastzelle beinhaltet, um den Mutterfaktor für die Schraube vor dem Beginnen von Montage der Verbindung zu erhalten.

18. Verfahren nach Anspruch 1 oder Anspruch 2, ferner beinhaltend zumindest einen der folgenden Dokumentationsschritte:
Speichern von Daten (65) aus den Überwachungsschritten der Verbindungsmontage;
Videoaufzeichnen jedes Montageschrittes, um Videos von Betrieben, Komponenten und Personal, das an der Verbindungsmontage involviert ist, zu speichern;
Videoaufzeichnen jedes Montageschrittes, dann Extrahieren und Speichern von Bildern von Betrieben, Komponenten und Personal, das an der Verbindungsmontage involviert ist;
Erfassen und Speichern von Bildern von Montageschritten, verwendeten Komponenten und involviertem Personal;
Speichern von Hauptparametern wie gespannten Schraubenlasten, Umdrehung der Mutter für jede Schraube, Spaltverschluss an mehreren Punkten um die Flanschverbindung; und/oder
Speichern von Ergebnissen von beliebigen Qualitätsinspektionen, die während Verbindungsmontage durchgeführt werden.

19. Verfahren nach Anspruch 18, ferner beinhaltend Verwenden von zumindest einem der Dokumentationsschritte zusammen mit anschließender Betriebsleistung der gespannten verschraubten Flanschverbindung, um dann Verbesserungen (66) bei Abläufen und bei Parametern bereitzustellen, die während Montage verwendet werden.

20. Verfahren nach Anspruch 1 oder Anspruch 2, ferner beinhaltend die folgenden Schritte:
Definieren (52) einer Risikoeinstufung für die verschraubte Flanschverbindung;
Definieren (53) eines Schraubenlastkontrolltyps und von Qualitätskontrollschritten für die Montage der verschraubten Flanschverbindung in Abhängigkeit von der Risikoeinstufung;
Steuern und Überwachen von Demontage (55) der verschraubten Flanschverbindung;
Inspizieren (56) der ersten und der zweiten Dichtfläche;
Testen von Anwendung der Schraubenlast unter Verwendung von Lastzellentestsensor, um zu verifizieren (59), ob Schraubenlast erreicht ist;
Installieren von Instrumentierung (60) an der verschraubten Flanschverbindung (1);
Bestätigen (61), dass korrekte Teile-ID und korrekte Komponenten und Anzugswerkzeuge verwendet werden;
Bereitstellen (62) von Schritt-für-Schritt-Anweisungen für Betreiber und Überwachen (63) der verschraubten Flanschverbindung während Montage;
Aufzeichnen (65) von zumindest einigen Demontage- und/oder Montageschritten, Messdaten und/oder Video.

21. Verfahren nach Anspruch 20, beinhaltend den Schritt des Modifizierens (64) der Schritt-für-Schritt-Anweisungen basierend auf dem Überwachen (63) der verschraubten Flanschverbindung während Montage.

22. Verfahren nach einem der Ansprüche 3 bis 5, beinhaltend Ausgeben einer Anweisung zum Stoppen (57), falls Verbindungsmontage abnormal wird oder falls eine unsichere Situation detektiert wird.

23. System zur Steuerung und Überwachung der Montage einer verschraubten Flanschverbindung (1), wobei die verschraubte Flanschverbindung einen ersten Flansch (2), einen zweiten Flansch (3), eine Dichtung (9) zwischen dem ersten Flansch und dem zweiten Flansch und zumindest vier Schrauben (4) beinhaltet, um die Flansche und die Dichtung der verschraubten Flanschverbindung, wenn sie montiert ist, zusammenzuhalten, wobei das System Folgendes beinhaltet:
zumindest einen Schraubenlastapplikator (30), um ein Anzugsdrehmoment oder eine Anzugslast auf die zumindest vier Schrauben anzuwenden,
einen Lastzellentestsensor (24), um Montageparameter zu kalibrieren und zu verifizieren,
einen Mutter- oder Schraubenkopfdrehsensor (37),
zumindest zwei Videokameras (40), die Videoerkennung von zumindest einem von einer Werkzeug- oder Komponentenform, einem Werkzeug- oder Komponentenidentifikationscode, einer spezifischen Schraube, die angezogen wird, oder einem unsicheren Betrieb oder einer unsicheren Betreiberposition zu ermöglichen, und
einen tragbaren elektronischen Prozessor (21), der Eingänge für die Sensoren und Ausgänge zum Übertragen oder Angeben von Verbindungsmontageparametern beinhaltet, und
zumindest einen der folgenden zusätzlichen Sensoren:
einen Schraubenspannungs- und/oder -dehnungssensor (38), um eine Schraubenlast zu bestimmen,
zumindest drei Flanschspaltsensoren (36), um einen Flanschspalt und beliebige Fehlausrichtung der Flansche zu bestimmen, und
einen Reaktionsdrehmomentsensor, um eine Größe von Drehmoment anzugeben, das durch einen Sicherungsschlüssel (35) reagiert wird.

24. System nach Anspruch 23, wobei der zumindest eine Schraubenlastapplikator (30) ein hydraulischer Spanner (30a) ist.

25. System nach Anspruch 23, wobei der zumindest eine Schraubenlastapplikator (30) zumindest einen Drehmomentschlüssel und zumindest einen Sicherungsschlüssel (35) umfasst.

26. System nach Anspruch 23, wobei die Montageparameter eines oder mehrere von einer Flanschspaltmessung (36), Fehlausrichtung der Flansche, einer Spannung oder Last in einer Schraube oder Dichtungskompression beinhalten.

27. System nach Anspruch 23, ferner beinhaltend einen Codeleser (41).

28. System nach Anspruch 23, wobei der zumindest eine zusätzliche Sensor zumindest einen Schraubendehnungssensor (38) zum Erfassen von Last in einer jeweiligen Schraube (4), während die jeweilige Schraube gespannt wird, beinhaltet.

29. System nach Anspruch 23, wobei der zumindest eine zusätzliche Sensor zumindest einen Dehnungssensor (38) zum Erfassen von Dehnung in jedem von Folgendem beinhaltet:
zumindest einem Viertel der Schrauben, wobei die zumindest vier Schrauben (4) weniger als oder gleich zweiunddreißig Schrauben sind; oder
in zumindest acht der Schrauben (4), wenn die zumindest vier Schrauben größer als 32 Schrauben sind.

30. System nach Anspruch 23 oder Anspruch 25, ferner beinhaltend zumindest eine zusätzliche Komponente, ausgewählt aus dem Folgenden:
einem angetriebenen Hochgeschwindigkeitsschlüssel,
einen Schraubenmontagemusterindikator (42), und/oder
einen Flanschflachheitssensor oder einen Flanschflachheits- und Defektsensor (43).

## Revendications

1. Procédé (50) permettant la commande et la surveillance de l'assemblage d'un raccord à brides boulonné (1), le raccord à brides boulonné comprenant une première bride (2) présentant une première surface d'étanchéité (11), une seconde bride (3) présentant une seconde surface d'étanchéité (12), un joint (9) entre la première bride et la seconde bride, et au moins quatre boulons (4) destinés à maintenir ensemble les brides et le joint du raccord à brides boulonné une fois assemblé, le procédé comprenant les étapes de :
l'obtention (72) directement ou indirectement en trois points ou plus autour des brides d'un écart de bride (G) entre la première bride et la seconde bride pour déterminer trois mesures d'écart de bride respectives ou plus ;
le calcul (73) à partir des trois mesures d'écart de bride ou plus d'un désalignement initial entre la première bride et la seconde bride ou entre la première surface d'étanchéité et la seconde surface d'étanchéité ;
si (74) le désalignement initial est supérieur à une amplitude prédéterminée de désalignement, alors :
la détermination (76) à partir du désalignement initial de celui des au moins quatre boulons (4) étant le premier boulon à serrer ;
le réglage d'un couple de serrage initial ou d'une charge de serrage initiale pour un applicateur de charge de boulon (30) ;
l'indication (77) du premier boulon à serrer à l'aide d'un indicateur de séquence d'assemblage de boulons (42) ;
le début (78) du serrage initial du premier boulon ;
la surveillance (79) de la rotation de tête de boulon ou d'écrou pour vérifier les problèmes et l'arrêt (57) de l'assemblage du raccord si des problèmes sont détectés ;
la surveillance (80) des mesures d'écart de bride ;
si (81) la surveillance (80) des mesures d'écart de bride indique que le désalignement a été corrigé, alors le commencement (75) d'une séquence de serrage de boulon standard en indiquant un deuxième boulon (4) à serrer ;
si (81) la surveillance (80) des mesures d'écart de bride indique que le désalignement n'a pas été corrigé lorsque le couple de serrage initial ou la charge de serrage initiale est atteint(e) sur le premier boulon, alors l'obtention de l'écart de bride aux trois points ou plus autour de la bride pour obtenir trois mesures d'écart de bride (G) respectives ou plus, le calcul d'un désalignement actuel puis la détermination (76) à partir du désalignement actuel de celui des au moins quatre boulons (4) étant le deuxième boulon à serrer, puis la répétition des étapes d'indication (77), de serrage (78) et de surveillance (79) du premier boulon pour le deuxième boulon, puis si (81) le désalignement n'a pas été corrigé après le serrage initial (82) d'au moins un tiers ou un quart des boulons (4), l'arrêt (57) de l'assemblage du raccord ; si (81) le désalignement a été corrigé, alors le commencement (75) d'une séquence de serrage de boulon standard ;
si (81) le désalignement initial est inférieur à l'amplitude de désalignement prédéterminée, alors le commencement (57) d'une séquence de serrage de boulon standard.

2. Procédé selon la revendication 1, dans lequel :
lorsque (74) le désalignement initial est supérieur à l'amplitude de désalignement prédéterminée, alors l'amplitude de désalignement prédéterminée est un premier désalignement de seuil ;
lorsque la surveillance (80) des mesures d'écart de bride indique qu'un désalignement actuel a été corrigé, alors le désalignement actuel est inférieur à un deuxième seuil qui est inférieur au premier désalignement de seuil ;
lorsque la surveillance (80) des mesures d'écart de bride indique que le désalignement actuel n'a pas été corrigé, alors le désalignement actuel est toujours supérieur au deuxième seuil qui est inférieur au premier désalignement de seuil.

3. Procédé selon la revendication 1 ou la revendication 2, dans lequel les au moins quatre boulons (4) comprennent au moins huit boulons, et dans lequel l'étape de reprise de la séquence de serrage de boulon standard comprend en outre les étapes de :
l'indication ensuite du serrage de chacun des quatre premiers des au moins huit boulons au couple ou charge de serrage initiaux ;
une fois que les quatre premiers des au moins huit boulons ont été serrés au couple ou charge de serrage initiaux, l'obtention d'une mesure d'écart de bride actuelle, le réglage (97) d'un deuxième couple ou charge pour l'outil de serrage ou tension de boulons pour le serrage initial des quatre suivants des au moins huit boulons qui est supérieur au couple ou charge de serrage initial ;
l'indication et le commencement du serrage initial de chacun des quatre suivants des au moins huit boulons ;
la surveillance de la rotation de tête de boulon ou d'écrou, de la mesure d'écart de bride et/ou de l'allongement du boulon pour vérifier les problèmes et arrêter le serrage (57) si des problèmes sont détectés ;
une fois que les quatre suivants des au moins huit boulons ont été serrés au deuxième couple ou charge de serrage, l'obtention d'une mesure d'écart de bride actuelle, le réglage d'un troisième couple ou charge pour l'outil de serrage ou tension de boulons pour le serrage initial des quatre derniers ou d'un reste des au moins huit boulons qui est supérieur au deuxième valeur de couple ou charge de serrage ;
l'indication et le début du serrage initial de chacun des quatre derniers ou du reste des au moins huit boulons ;
la surveillance (101) de la rotation de tête de boulon ou d'écrou, de la mesure d'écart de bride et/ou de l'allongement du boulon pour vérifier les problèmes et l'arrêt (57) de l'assemblage du raccord si des problèmes sont détectés ;
la poursuite du serrage de la totalité des au moins huit boulons jusqu'à ce que (98) la rotation de tête de boulon ou d'écrou ne se produise plus et/ou jusqu'à ce que la mesure de l'allongement de boulon indique que la charge de boulon cible a été atteinte.

4. Procédé selon la revendication 3, dans lequel l'étape de reprise de la séquence de serrage de boulon standard peut en outre comprendre les étapes de :
une fois que les quatre derniers ou le reste des au moins huit boulons ont été serrés au troisième couple ou charge de serrage, l'obtention d'une mesure d'écart de bride actuelle,
le réglage d'un couple ou charge finaux pour l'outil de serrage ou tension de boulons pour le serrage final de la totalité des au moins huit boulons ;
l'indication et le début du serrage final (109) de chacun des au moins huit boulons chacun son tour ;
la surveillance (105) de la rotation de tête de boulon ou d'écrou et/ou de l'allongement de boulon pour vérifier les problèmes et l'arrêt du serrage (57) si des problèmes sont détectés.

5. Procédé selon la revendication 4, dans lequel la quantité de rotation d'écrou ou de la tête de boulon est surveillée pendant le serrage des quatre derniers ou du reste des au moins huit boulons et une fois que les quatre derniers ou le reste des au moins huit boulons ont été serrés au troisième couple ou charge de serrage, alors ladite quantité de rotation de tête boulon ou d'écrou est utilisée pour déterminer (98) s'il convient d'utiliser une première séquence d'ordre de boulons pour au moins un serrage de passe intermédiaire (99) de la totalité des au moins huit boulons, ou d'utiliser une deuxième séquence d'ordre de boulons pour au moins un serrage de pénultième passe (103) de la totalité des au moins huit boulons, avant le réglage d'un couple ou charge finaux pour l'outil de serrage ou tension de boulons pour le serrage final (109) de la totalité des au moins huit boulons,
l'au moins un serrage de passe intermédiaire (99) de la totalité des au moins huit boulons comprend la surveillance (100) de la rotation de tête de boulon ou d'écrou pour déterminer s'il convient de répéter une autre passe intermédiaire en utilisant la première séquence d'ordre de boulons, ou d'utiliser la deuxième séquence d'ordre de boulons pour au moins un serrage de pénultième passe (103) de la totalité des au moins huit boulons, avant le réglage d'un couple ou charge finaux pour l'outil de serrage ou tension de boulons pour le serrage final (109) de la totalité des au moins huit boulons.

6. Procédé selon la revendication 1 ou la revendication 2, dans lequel l'étape de reprise de la séquence de serrage de boulon standard comprend en outre les étapes de :
l'application (92) d'un premier couple ou charge de serrage à un premier groupe d'au moins un quart des au moins quatre boulons (4), le premier couple de serrage étant une première proportion par rapport à un couple ou charge de serrage cible ;
l'application d'un deuxième couple (97) ou charge de serrage à un deuxième groupe d'au moins un quart des au moins quatre boulons, le deuxième couple de serrage étant une deuxième proportion par rapport au couple ou charge de serrage cible, la deuxième proportion étant inférieure à la première proportion ;
l'application du couple ou charge de serrage cible aux quatre derniers ou à un reste des au moins quatre boulons ;
la poursuite du serrage de la totalité des au moins quatre boulons (4) jusqu'à ce que la rotation de tête de boulon ou d'écrou ne se produise plus (107) et/ou jusqu'à ce que la mesure de l'allongement de boulon indique que la charge de boulon cible a été atteinte.

7. Procédé selon la revendication 6, dans lequel la quantité de rotation de tête de boulon ou d'écrou est surveillée (94) pendant le serrage des quatre derniers ou du reste des au moins quatre boulons, et une fois que les quatre derniers ou le reste des au moins quatre boulons ont été serrés au couple ou charge cible, alors ladite quantité de rotation de tête de boulon ou d'écrou est utilisée pour déterminer (98) s'il convient d'utiliser une première séquence d'ordre de boulons pour au moins un serrage de passe intermédiaire (99) de la totalité des au moins quatre boulons, ou d'utiliser une deuxième séquence d'ordre de boulons pour au moins un serrage de pénultième passe (103) de la totalité des au moins quatre boulons, avant le réglage d'un couple ou charge finaux pour l'outil de serrage ou tension de boulons pour le serrage final (109) de la totalité des au moins quatre boulons
l'au moins un serrage de passe intermédiaire de la totalité des au moins quatre boulons comprend la surveillance (101) de la rotation de tête de boulon ou d'écrou pour déterminer s'il convient de répéter une autre passe intermédiaire en utilisant la première séquence d'ordre de boulon, ou d'utiliser la deuxième séquence d'ordre de boulon pour au moins un serrage de pénultième passe (103) de la totalité des au moins quatre boulons, avant le réglage d'un couple ou charge finaux pour l'outil de serrage ou tension de boulons pour le serrage final (109) de la totalité des au moins quatre boulons.

8. Procédé selon la revendication 1 ou la revendication 2, comprenant en outre, avant les étapes d'obtention (72) en trois points ou plus autour de la bride d'un écart de bride et de calcul (73) d'un désalignement initial (74), les étapes de :
le nettoyage et/ou l'inspection (43, 56) du raccord ;
l'arrêt de l'assemblage (57) si l'inspection est en dehors de limites prédéterminées ; et
le stockage (65) des données pour référence.

9. Procédé selon la revendication 1 ou la revendication 2, comprenant en outre, avant les étapes d'obtention (72) en trois points ou plus autour de la bride d'un écart de bride et de calcul (73) d'un désalignement initial (74), les étapes de :
l'identification d'un joint à installer, la validation (61) de l'identification du joint (9), la mise en pause ou l'arrêt de l'assemblage (57) du raccord si la validation du joint échoue ou indique des pièces incorrectes ; et/ou
l'identification des boulons à installer, la validation (61) de l'identification des boulons, la mise en pause ou l'arrêt de l'assemblage (57) du raccord si la validation des boulons échoue ou indique des pièces incorrectes.

10. Procédé selon l'une quelconque des revendications 1 à 9, dans lequel l'applicateur de charge de boulon comprend une clé de retenue (35) et une clé dynamométrique et/ou une clé motorisée à grande vitesse (30) ;
l'étape de serrage du premier boulon comprend l'étape de surveillance de la clé de retenue (35).

11. Procédé selon la revendication 10, dans lequel l'étape de surveillance de la clé de retenue comprend au moins l'une des suivantes :
la surveillance vidéo d'une clé de retenue mécanique ;
la surveillance vidéo d'une clé de retenue électronique ; et/ou
la surveillance de la sortie d'un capteur de couple de réaction.

12. Procédé selon la revendication 10, comprenant en outre l'étape de mise en pause ou d'arrêt de l'assemblage (57) du raccord chaque fois que la surveillance (63) de la clé de retenue, de la charge, de la rotation d'écrou et/ou de l'écart de bride indique un problème avec l'assemblage du raccord.

13. Procédé selon la revendication 10 comprenant en outre, avant l'étape de réglage d'un couple ou d'une charge pour l'applicateur de charge de boulon (30), l'étape de reconnaissance visuelle (40) de l'applicateur de charge de boulon ou de capture ou de lecture (41) d'une étiquette ou marque d'identification sur l'applicateur de charge de boulon.

14. Procédé selon la revendication 1 ou la revendication 2, comprenant la détermination (54) de l'identité et de l'emplacement du raccord à brides boulonné en utilisant des données géospatiales par positionnement mondial ou un réseau de transmission sans fil et par triangulation ou trilatération.

15. Procédé selon la revendication 14, comprenant en outre l'utilisation de données d'orientation de raccord à brides boulonné et de reconnaissance d'image vidéo pour identifier le raccord à brides boulonné.

16. Procédé selon la revendication 1 ou la revendication 2, comprenant en outre l'étape de surveillance vidéo continue (40) de la zone autour du raccord et la mise en pause ou l'arrêt de l'assemblage (57) si du personnel se trouve dans une zone à risque adjacente autour du raccord.

17. Procédé selon la revendication 1 ou la revendication 2, comprenant en outre l'étape d'utilisation de l'applicateur de charge de boulon (30) avec un boulon dans un équipement de test sur site comprenant une cellule de charge, pour obtenir le facteur d'écrou pour le boulon avant le début de l'assemblage du raccord.

18. Procédé selon la revendication 1 ou la revendication 2 comprenant en outre au moins l'une des étapes de documentation suivantes :
le stockage des données (65) provenant des étapes de surveillance de l'assemblage du raccord ;
l'enregistrement vidéo de chaque étape d'assemblage pour stocker la vidéo des opérations, des composants et du personnel impliqué dans l'assemblage du raccord ;
l'enregistrement vidéo de chaque étape d'assemblage, puis l'extraction et le stockage des images des opérations, des composants et du personnel impliqués dans l'assemblage du raccord ;
la capture et le stockage des images des étapes d'assemblage, des composants utilisés et du personnel impliqué ;
le stockage des paramètres clés tels que les charges de boulon sous tension, la rotation de l'écrou pour chaque boulon, la fermeture de l'écart en plusieurs points autour du raccord à brides ; et/ou
le stockage des résultats de toute inspection de qualité effectuée lors de l'assemblage du raccord.

19. Procédé selon la revendication 18 comprenant en outre l'utilisation d'au moins l'une des étapes de documentation conjointement avec le fonctionnement ultérieur du raccord à brides boulonné sous tension pour apporter par la suite des améliorations (66) aux procédures et aux paramètres utilisés pendant l'assemblage.

20. Procédé selon la revendication 1 ou la revendication 2, comprenant en outre les étapes de :
la définition (52) d'un classement de risques pour le raccord à brides boulonné ;
la définition (53) d'un type de contrôle de charge de boulon et d'étapes de contrôle qualité pour l'assemblage du raccord à brides boulonné en fonction du classement de risques ;
la commande et la surveillance du démontage (55) du raccord à brides boulonné ;
l'inspection (56) des première et seconde surfaces d'étanchéité ;
le test d'application de la charge de boulon à l'aide du capteur de test de cellule de charge pour vérifier (59) la charge de boulon atteinte ;
l'installation de l'instrumentation (60) au niveau du raccord à brides boulonné (1) ;
la confirmation (61) que l'ID de pièce correct et les composants et outils de serrage corrects sont utilisés ;
la fourniture (62) d'instructions pas à pas à l'opérateur et la surveillance (63) du raccord à brides boulonné pendant l'assemblage ;
l'enregistrement (65) d'au moins certaines étapes de démontage et/ou d'assemblage, de données de mesure et/ou de vidéo.

21. Procédé selon la revendication 20, comprenant l'étape de modification (64) des instructions pas à pas sur la base de la surveillance (63) du raccord à brides boulonné pendant l'assemblage.

22. Procédé selon l'une quelconque des revendications 3 à 5, comprenant l'émission d'une instruction d'arrêt (57) si l'assemblage du raccord devient anormal ou si une situation dangereuse est détectée.

23. Système permettant la commande et la surveillance de l'assemblage d'un raccord à brides boulonné (1), le raccord à brides boulonné comprenant une première bride (2), une seconde bride (3), un joint (9) entre la première bride et la seconde bride, et au moins quatre boulons (4) pour maintenir ensemble les brides et le joint du raccord à brides boulonné une fois assemblé, le système comprenant :
au moins un applicateur de charge de boulon (30) pour appliquer un couple ou charge de serrage aux au moins quatre boulons,
un capteur de test de cellule de charge (24) pour étalonner et vérifier les paramètres d'assemblage,
un capteur de rotation de tête de boulon ou d'écrou (37),
au moins deux caméras vidéo (40) permettant la reconnaissance vidéo d'au moins l'un parmi une forme d'outil ou de composant, un code d'identification d'outil ou de composant, un boulon spécifique étant serré ou une opération ou position d'opérateur dangereuse, et
un processeur électronique portable (21) comprenant des entrées pour les capteurs et des sorties pour transmettre ou indiquer les paramètres d'assemblage du raccord, et
au moins l'un des capteurs supplémentaires suivants :
un capteur de tension et/ou d'allongement de boulon (38) pour déterminer une charge de boulon,
au moins trois capteurs d'écart de bride (36) pour déterminer un écart de bride et tout désalignement des brides, et
un capteur de couple de réaction pour indiquer une amplitude de couple en réaction à une clé de retenue (35).

24. Système selon la revendication 23, dans lequel l'au moins un applicateur de charge de boulon (30) est un tendeur hydraulique (30a).

25. Système de la revendication 23, dans lequel l'au moins un applicateur de charge de boulon (30) comprend au moins une clé dynamométrique et au moins une clé de retenue (35).

26. Système selon la revendication 23, dans lequel les paramètres d'assemblage comprennent un ou plusieurs parmi une mesure d'écart de bride (36), un désalignement des brides, une tension ou charge dans un boulon ou une compression de joint.

27. Système selon la revendication 23, comprenant en outre un lecteur de code (41).

28. Système selon la revendication 23, dans lequel l'au moins un capteur supplémentaire comprend au moins un capteur d'allongement de boulon (38) pour détecter la charge dans un dit boulon respectif (4) lorsque le boulon respectif est mis sous tension.

29. Système selon la revendication 23, dans lequel l'au moins un capteur supplémentaire comprend au moins un capteur d'allongement (38) pour détecter l'allongement dans chacun des cas suivants :
au moins un quart des boulons lorsque les au moins quatre boulons (4) sont inférieurs ou égaux à trente-deux boulons ; soit
dans au moins huit des boulons (4) lorsque les au moins quatre boulons sont supérieurs à 32 boulons.

30. Système selon la revendication 23 ou la revendication 25 comprenant en outre au moins un composant supplémentaire choisi parmi les suivants :
une clé motorisée à grande vitesse,
un indicateur de séquence d'assemblage de boulons (42), et/ou
un capteur de planéité de bride ou un capteur de planéité et de défaut de bride (43).
